# EUROPÄISCHE PATENTSCHRIFT

(11) **EP 3 562 790 B1**
(45) Veröffentlichungstag und Bekanntmachung des Hinweises auf die Patenterteilung: **12.02.2025**
(21) Anmeldenummer: 17825853.9
(22) Anmeldetag: 21.12.2017
(51) Int. Cl.: C03B 33/02, B23K 26/00, B23K 26/53, B23K 103/00

(54) **VERFAHREN ZUM TRENNEN VON SUBSTRATEN UND DAZU GEHÖRENDEN SUBSTRATEN**
METHOD FOR SEPARATING SUBSTRATES AND ASSOCIATED SUBSTRATES
PROCÉDÉ POUR SÉPARER DES SUBSTRATS ET SUBSTRATS ASSOCIÉS

(30) Priorität: 02.01.2017 DE 102017100015
(43) Veröffentlichungstag der Anmeldung: 06.11.2019
(73) Patentinhaber: SCHOTT AG, 55122 Mainz (DE)
(72) Erfinder: WAGNER, Fabian, 55118 Mainz (DE); PLAPPER, Volker, 55232 Alzey (DE); ORTNER, Andreas, 55435 Gau-Algesheim (DE); SCHMITT, Simon, 65189 Wiesbaden (DE); LENTES, Frank-Thomas, 55411 Bingen (DE); SEIDL, Albrecht, 63843 Niedernberg (DE); MAKACS, Antal, 99441 Großschwabhausen (DE); BARTHOLOME, Patrick, 07745 Jena (DE)
(74) Vertreter: Blumbach · Zinngrebe Patentanwälte PartG mbB
(86) Internationale Anmeldenummer: PCT/EP2017/084177
(87) Internationale Veröffentlichungsnummer: WO 2018/122112

(56) Entgegenhaltungen:
- US-A1- 2013 126 573
- US-A1- 2014 340 730
- US-A1- 2015 165 548

## Beschreibung

Die Erfindung betrifft ein Verfahren zum lasergestützten Trennen von Substraten aus Glas, Glaskeramik oder Silizium, bei welchem entlang einer vorbestimmten Trennlinie mit einem gepulsten Laserstrahl voneinander beabstandet Schädigungen in das Substrat eingebracht werden. Die Erfindung betrifft ferner ein Werkstück ausgebildet als ein Glasprodukt ein Glaskeramikprodukt oder ein Siliziumprodukt, welches entlang einer Trennlinie voneinander beabstandete Schädigungen aufweist.

Ein in der Glasindustrie weit verbreitetes Schneidverfahren ist das mechanische Ritzen und Brechen. Das Verfahren ist kostengünstig, jedoch im Wesentlichen auf gerade Schnitte beschränkt. Nach dem Brechen weisen die Kanten häufig keine ausreichende Qualität auf, so dass eine aufwendige Nachbearbeitung, z.B. durch Schleifen bzw. Polieren nötig werden kann.

Ein anderes Verfahren ist das Wasserstrahlschneiden, welches zwar Freiformgeometrien zulässt, jedoch relativ langsam und teuer bei gleichzeitig begrenzter Qualität ist, so dass eine weitere Nachbearbeitung der Kante auch bei diesem Verfahren typischerweise notwendig ist. Das Verfahren des Wasserstrahlschneidens findet daher vorwiegend Anwendung für komplexe Geometrien, die sich mit dem Ritzen und Brechen und einer sich ggf. anschließenden Nachbearbeitung nicht herstellen lassen.

Bei dem Verfahren des thermischen Laser-Scribings wird das Glas z.B. mittels eines CO₂-Lasers entlang der Schnittlinie erhitzt und sofort wieder stark abgekühlt. Hiermit ist es möglich, hohe Kantenqualitäten zu erzielen und gleichzeitig Freiformgeometrien herzustellen, wobei die Krümmungsradien der Schnittkante allerdings nicht zu gering sein dürfen. Das Laser-Scribing eignet sich jedoch nicht oder nur mit hohen Qualitätsverlusten für Gläser mit größerer Dicke und insbesondere nicht für Gläser mit niedrigem thermischen Ausdehnungskoeffizienten.

Besonders vielversprechend erscheint vor diesem Hintergrund das Verfahren der Laser-Filamentierung. Hierbei wird mit einem Ultrakurzpuls-Laser eine Trennlinie, z.B. in Form einer Perforierung, in das Glas eingebracht.

Wie etwa die US2013/126573 A1 oder WO 2012/006736 A2 beschreibt, können mit einem gepulsten fokussierten Laserstrahl Filamente in einem transparenten Substrat erzeugt werden, wobei ein aus mehreren Filamenten gebildeter Pfad das Trennen des Substrats ermöglicht. Ein Filament wird dabei durch einen hochenergetischen kurzen Laserpuls hergestellt, wobei angenommen wird, dass der nichtlineare optische Kerr-Effekt zur Selbstfokussierung des Laserstrahls führt, wodurch Plasmabildung bewirkt wird.

Die US 2015/165548 A1 beschreibt Verfahren zum Abschrägen und/oder Anfasen einer Kante eines Glases oder eines anderen Substrats unter Verwendung von Lasern. Bei einem ersten Verfahren kommt ein Ultrakurzpulslaser zum Einsatz und optional im Anschluss ein CO2-Laser. Ein zweites Verfahren basiert auf thermischen Spannungen mit verschiedenen Kombinationen von Ultrakurzpuls- und/oder CO2-Lasern. Ein drittes Verfahren beruht auf Spannungen, die durch Ionenaustausch induziert werden.

Die US 2014/340730 A1 beschreibt Verfahren zum Schneiden von gehärtetem Glas unter Einsatz eines Lasers sowie gehärtetes Glas mit Kanten, die Anzeichen eines Laserschneidprozesses aufweisen.

Auch die DE 10 2012 110 971 A1 beschreibt ein Verfahren der Trennvorbereitung von transparenten Werkstücken, bei welchem sich quer durch das Werkstück erstreckende, aneinander gereihte Filamentstrukturen durch ultrakurze Laserpulse entlang einer Sollbruchlinie erzeugt werden.

Nachdem mittels Laser-Filamentierung ein Filamentpfad, insbesondere in Form einer Vorschädigungslinie bzw. einer Perforationslinie, in das Glas eingebracht wurde kann das Glas in einem weiteren sogenannten Cleaving-Schritt aufgetrennt werden. Dabei wird der Filamentpfad z.B. mit einem CO₂-Laser nachgefahren, so dass sich das Glas entlang des Filamentpfades und somit entlang einer vorgesehenen Trennlinie trennt. Während des Cleaving-Schritts kann es jedoch insbesondere bei komplexen Geometrien oder bei Materialien mit niedrigem thermischen Ausdehnungskoeffizienten zu Fehlern kommen, etwa dergestalt, dass der Riss nicht der voreingebrachten Trennlinie folgt und ausreißt, oder dass der Riss nicht startet bzw. abbricht. Es hat sich gezeigt, dass sich solche Probleme bei verschiedenen Gläsern unterschiedlich darstellen können, d.h. mitunter auch von dem jeweils zu trennenden Glas abhängen können.

Die Erfindung hat sich daher allgemein die Aufgabe gestellt das Verfahren der Laser-Filamentierung mit anschließendem Cleaving-Schritt zu optimieren, insbesondere im Hinblick auf das jeweils zu trennende Material.

Ein Aspekt der Aufgabe der Erfindung ist es, die Qualität der Trennkante zu verbessern.

Die Aufgabe wird erfindungsgemäß durch die Gegenstände der unabhängigen Ansprüche gelöst. Vorteilhafte Weiterbildungen der Erfindung sind Gegenstände der abhängigen Ansprüche.

Die Erfindung betrifft demnach ein Verfahren zum Trennen eines Substrats aus sprödhartem Material, nämlich aus Glas, Glaskeramik und/oder Silizium, wobei entlang einer vorbestimmten Trennlinie mit wenigstens einem gepulsten Laserstrahl voneinander beabstandet Schädigungen in das Substrat eingebracht werden.

Es werden demnach nebeneinander entlang einer Trennlinie filamentförmige Schädigungen im Volumen des Substrats erzeugt, wobei das Substrat insbesondere als flächiges Glaselement, als flächiges Glaskeramikelement oder als flächiger Siliziumwafer ausgebildet sein kann. Die filamentförmigen Schädigungen werden durch Laserpulse eines Lasers erzeugt, insbesondere indem die Laserpulse im Volumen des Glases ein Plasma erzeugen, wobei das Material des Substrats für die Laserpulse transparent ist, und die Auftreffpunkte der Laserpulse auf dem Substrat über dessen Oberfläche entlang der Trennlinie bewegt werden.

Beim Einbringen der Schädigungen wird sowohl der mittlere Abstand zwischen benachbarten Schädigungen als auch die Anzahl der Laserpulse zur Erzeugung jeweils einer der Schädigungen derart gewählt, dass (a) die Bruchspannung σ_{B} zum Trennen des Substrats entlang der Trennlinie kleiner ist als eine von dem jeweiligen Substrat abhängige erste Referenzspannung σ_{R1}, (b) die Kantenfestigkeit σ_{K} der nach dem Trennen erhaltenen Trennkante größer ist als eine von dem jeweiligen Substrat abhängige zweite Referenzspannung σ_{R2} und (c) das Substrat nach dem Einbringen der Schädigungen durch Einwirkung einer Spannung entlang der Trennlinie trennbar ist.

Mit anderen Worten wird die Laser-Filamentierung im Hinblick auf die Bruchspannung des Substrats vorgenommen, wobei insbesondere die Anzahl an Pulsen, die in einzelne Perforationsstellen geschossen werden und der Abstand der Filamente entsprechend vorausgewählt wird. Ferner ist es auch möglich, die Zeitdifferenz zwischen den Einzelpulsen für die Erzeugung eines Filaments vorauszuwählen.

Unter der Bruchspannung σ_{B} ist dabei diejenige Spannung zu verstehen, die erforderlich ist, um das Substrat, nachdem die Schädigungen eingebracht wurden, entlang der Trennlinie zu trennen, d.h. den Filamentierungskanal zu öffnen. Für die Bruchspannung gilt σ_{B} < σ_{R1}, wobei die erste Referenzspannung σ_{R1} einen vom Substrat abhängigen Wert bezeichnet, insbesondere einen Wert, der von dem Material des Substrats und/oder dessen Eigenschaften abhängt.

Weiterhin kann mit den Filamentierungsparametern auch die Kantenfestigkeit beeinflusst werden. Unter der Kantenfestigkeit σ_{K} ist diejenige Spannung zu verstehen, die aufgebracht werden muss, um in das Substrat mit der nach dem Trennen erhaltenen Trennkante einen Riss zu treiben und das Substrat zum Brechen zu bringen. Für die Kantenfestigkeit gilt σ_{K} > σ_{R2}, wobei die zweite Referenzspannung σ_{R2} wiederum einen vom Substrat abhängigen Wert bezeichnet, insbesondere einen Wert der von dem Material des Substrats und/oder dessen Eigenschaften abhängt.

Erfindungsgemäß ist vorgesehen, dass (A) die erste und die zweite Referenzspannung σ_{R1} = σ_{R2} identisch sind und vorgegeben sind als eine vom Material des Substrats abhängige maximale thermische Spannung σₜₕ oder bei einem chemisch oder thermisch vorgespannten Substrat als eine durch die Eigenschaften des vorgespannten Substrats definierte innere Zugspannung σ_{CT}, wobei im ersten Fall die maximale thermische Spannung σₜₕ nach der Formel σₜₕ = 0,5·α·E·(T_{g}-100°C) bestimmbar ist, wobei a den thermischen Ausdehnungskoeffizienten des Materials des Substrats bezeichnet, E den Elastizitätsmodul des Materials des Substrats bezeichnet und T_{g} die Glasübergangstemperatur des Materials des Substrats bezeichnet und wobei im zweiten Fall bei einem chemisch vorgespannten Substrat die innere Zugspannung σ_{CT} nach der Formel σ_{CT} = (σ_{CS}·d_{L})/(d-2d_{L}) oder bei einem thermisch vorgespannten Substrat nach der Formel σ_{CT} = σ_{CS}/2 bestimmbar ist, wobei σ_{CS} die Oberflächendruckspannung des vorgespannten Substrats, d_{L} die Eindringtiefe der Vorspannung und d die Dicke des Substrats bezeichnet, oder dass (B) für die erste Referenzspannung σ_{R1} ≤ C_{R1}· α ·E·(T_{g}-100°C) gilt und für die zweite Referenzspannung σ_{R2} ≥ C_{R2}·α·E·(T_{g}-100°C) gilt, wobei C_{R1} und C_{R2} Referenzspannungskoeffizienten mit C_{R1}=0,5/k und C_{R2}=0,5·k und k=1,5, vorzugsweise k=2, besonders bevorzugt k=2,5 sind und wobei α den thermischen Ausdehnungskoeffizienten des Materials des Substrats bezeichnet, E den Elastizitätsmodul des Materials des Substrats bezeichnet und T_{g} die Glasübergangstemperatur des Materials des Substrats bezeichnet.

Im Fall (A) ist demnach insbesondere vorgesehen, dass die erste und die zweite Referenzspannung identisch sind und vorgegeben sind als eine vom Material des Substrats abhängige maximale thermische Spannung, d.h. σ_{R1} = σ_{R2} = σₜₕ. Unter der maximalen thermischen Spannung σₜₕ ist dabei diejenige Spannung zu verstehen, die durch punktuelle Erwärmung des Substrats, insbesondere mittels eines CO₂-Lasers höchstens erzielt werden kann.

Die maximale thermische Spannung σₜₕ ist nach der Formel
σₜₕ = 0,5·α·E·(T_{g}-100°C) bestimmbar, wobei α den thermischen Ausdehnungskoeffizienten des Materials des Substrats bezeichnet, E den Elastizitätsmodul des Materials des Substrats bezeichnet und T_{g} die Glasübergangstemperatur des Materials des Substrats bezeichnet.

Im Rahmen einer DOE-Versuchsreihe, auf welche weiter unten näher eingegangen wird, konnte experimentell bestätigt werden, dass der Cleaving-Schritt bei Proben aus unterschiedlichen Gläsern unter den genannten Voraussetzungen, insbesondere σ_{B} < 0,5· α ·E·(T_{g}-100°C) und σ_{K} > 0,5· α ·E·(T_{g}-100°C) besonders gut gelingt.

Im Fall (B) ist vorgesehen, dass für die erste Referenzspannung σ_{R1} ≤ C_{R1}· α ·E·(T_{g}-100°C) gilt und für die zweite Referenzspannung σ_{R2} ≥ C_{R2}· α ·E·(T_{g}-100°C) gilt, wobei C_{R1} und C_{R2} Referenzspannungskoeffizienten mit C_{R1}=0,5/k und C_{R2}=0,5*k und k=1,5, vorzugsweise k=2, besonders bevorzugt k=2,5 sind und wobei wiederum α den thermischen Ausdehnungskoeffizienten des Materials des Substrats bezeichnet, E den Elastizitätsmodul des Materials des Substrats bezeichnet und T_{g} die Glasübergangstemperatur des Materials des Substrats bezeichnet.

Es ist demnach z.B. insbesondere bevorzugt, dass für die Bruchspannung σ_{B} < 0,25· α ·E·(T_{g}-100°C) gilt und für die Kantenfestigkeit σ_{K} > 0,5· α ·E·(T_{g}-100°C). Noch bevorzugter kann es sein, dass für die Bruchspannung σ_{B} < 0,25· α ·E·(T_{g}-100°C) gilt und für die Kantenfestigkeit σ_{K} > α ·E·(T_{g}-100°C). Erwähnenswert ist, dass für die Bruchspannung ferner vorzugsweise σ_{B} > 1/20 α ·E·(T_{g}-100°C) gilt.

Liegt beispielsweise der Wert der thermisch eingebrachten Spannung des Cleaving-Schritts über dem oberen Grenzwert für die Bruchspannung, kann das Substrat wegen der Nähe zu T_{g} lokal relaxieren, d.h. die notwendige Spannung kann nicht aufgebaut werden und der Cleaving-Schritt misslingt, wobei hierbei vom Mittelwert der Spannungsverteilung ausgegangen wird.

Die vorstehenden Ausführungen gelten insbesondere für Substrate aus Glas, welche nicht vorgespannt sind. Bei vorgespanntem Substrat bzw. Glas kommt es hingegen weniger stark auf den Wert des thermischen Ausdehnungskoeffizienten α an. Wichtiger ist demgegenüber die innere Zugspannung σ_{CT} ("center tension").

Im Fall eines insbesondere chemisch vorgespannten Substrats, vorzugsweise aus Glas, ist demnach vorgesehen, dass die erste und die zweite Referenzspannung identisch sind und vorgegeben sind als eine durch die Eigenschaften des vorgespannten Substrats definierte innere Zugspannung, d.h. σ_{R1} = σ_{R2} = σ_{CT}.

Die innere Zugspannung σ_{CT} ist bei chemisch vorgespanntem Substrat nach der Formel σ_{CT} = (σ_{CS}·d_{L})/(d-2d_{L}) bestimmbar, wobei σ_{CS} die Oberflächendruckspannung (compaction stress) des vorgespannten Substrats bezeichnet, d die Dicke des Substrats, insbesondere des flächigen Glassubstrats bezeichnet, und d_{L} die Eindringtiefe der Vorspannung ("depth of layer", DoL) bezeichnet, mit anderen Worten die Entfernung des Nulldurchganges der Spannung von der Substratoberfläche bzw. die Dicke der vorgespannten Schicht des Substrats.

Die innere Zugspannung σ_{CT} ist thermisch vorgespanntem Substrat nach der Formel σ_{CT} = σ_{CS}/2 bestimmbar, wobei σ_{CS} die Oberflächendruckspannung (compaction stress) des vorgespannten Substrats bezeichnet.

Für den Prozess des Cleavens kann es somit bevorzugt sein, die Bruchspannung geringer einzustellen als die innere Zugspannung σ_{CT}, die Kantenfestigkeit hingegen deutlich größer. Für den Prozess des Cleavens kann es somit besonders bevorzugt sein, die Bruchspannung geringer einzustellen als die Summe von innerer Zugspannung σ_{CT} und thermischer Spannung σₜₕ, die Kantenfestigkeit hingegen größer, insbesondere deutlich größer.

Unabhängig davon, ob es sich um ein vorgespanntes oder nicht vorgespanntes Substrat handelt, kann nach dem Einbringen der Schädigungen ein Auftreffpunkt einer Laserstrahlung, vorzugsweise eines CO₂-Lasers, auf dem Substrat entlang der Trennlinie bewegt werden, um die zur Trennung entlang der Trennlinie einzuwirkende Spannung hervorzurufen. Dieser Schritt wird auch als Cleaving-Schritt bezeichnet und erfolgt durch die oben beschriebenen Maßnahmen in vorteilhafter Weise.

Mittels des Cleaving-Schritts werden an bzw. entlang der Trennlinie lokale thermomechanische Spannungen in dem Substrat, d.h. insbesondere in dem Glaselement, dem Glaskeramikelement bzw. dem Siliziumelement hervorgerufen, um eine Rissbildung zwischen benachbarten filamentförmigen Schädigungen zu bewirken, d.h. um benachbarte filamentförmigen Schädigungen durch Risse zu verbinden.

Dadurch kann die Perforation zu einer zumindest abschnittsweisen Trennfuge vervollständigt werden, d.h. es kann eine zumindest teilweise Auftrennung oder Aufspaltung des Substrats entlang der Trennlinie erreicht werden. Vorzugsweise wird eine vollständige Trennfuge herbeigeführt.

Mit der wie oben beschrieben eingestellten Bruchspannung bzw. Kantenfestigkeit werden die Voraussetzungen für das Gelingen des Cleaving-Schritts in einer Reihe von Aspekten optimiert.

Zum einen gelingt das Auftrennen der Perforationslinie auch bei Materialien mit relativ niedrigem thermischen Ausdehnungskoeffizienten α. Erfolgreich getrennt werden können insbesondere Materialien bzw. Gläser mit α < 5·10⁻⁶ K⁻¹, vorzugsweise mit α < 4,5·10⁻⁶ K⁻¹, besonders bevorzugt mit α < 4·10⁻⁶ K⁻¹. Dies konnte im Rahmen unten näher beschriebener DOE-Versuche verifiziert werden.

Zum anderen kann während des Cleaving-Schritts die laterale Abweichung des Laserspots zur Perforierungslinie größer sein, d.h. die Lagetoleranz des Auftreffpunkts des CO₂-Lasers braucht weniger präzise zu sein, ohne dass der Cleaving-Schritt misslingt. Während diese laterale Abweichung herkömmlicherweise kleiner als 500 µm sein sollen, können mit dem erfindungsgemäßen Verfahren vorteilhaft laterale Abweichungen bis zu 3 mm toleriert werden. Auch dies wurde im Rahmen der unten dargestellten Versuche insbesondere für Materialien mit α > 4,5·10⁻⁶ K⁻¹, welche wie beschrieben filamentiert, d.h. perforiert, wurden, bestätigt.

Ferner kann auch in vorteilhafter Weise die Leistung des für das Cleaving verwendeten Lasers bei gleichbleibender Geschwindigkeit reduziert werden.

Die Erzeugung der Schädigungen basiert auf dem Einsatz eines Lasers, welcher vorzugsweise ultrakurze Laserpulse abgibt (UKP-Laser). Die Laserpulse erzeugen filamentförmige Schädigungen präzise entlang der vorgegebenen Trennlinie quer durch das vorzugsweise flächige Substrat durch lokale Zerstörung des Werkstoffs in der Wechselwirkungszone mit dem Laserlicht. Die Schädigungen sind typischerweise ausgebildet als definierte linienhafte Schädigungen, deren Länge durch Wahl geeigneter Pulsenergien und Pulsdauern beeinflusst werden kann. Durch Erzeugung einer Mehrzahl in geeignetem Abstand zueinander liegender Filamente wird eine Perforation des Werkstoffs erzielt.

Durch eine solche Mikroperforation wird dabei an den Schnittkanten des Substrats eine sehr hohe Kantenqualität erreicht. Das Verfahren stellt somit ein Präzisionstrennverfahren dar, welches eine hohe und definierte Kantenqualität gewährleistet und somit insbesondere zu einer hohen und definierten Kantenfestigkeit bzw. Biegefestigkeit des Subsrats nach der Trennung führt. Die erzielten Kantenqualitäten sind insbesondere hoch genug, dass auf ein nachfolgendes Schleifen der Kanten oft verzichtet werden kann.

Die Erzeugung der Schädigungen erfolgt insbesondere im Betrieb des Ultrakurzpuls-Lasers im sogenannten Burst-Mode. Bei diesem Betriebsmodus wird der Laserpuls nicht als Einzelpuls abgegeben, sondern als Folge kurz hintereinander abgegebener Pulse, die gemeinsam ein Pulspaket, einen sogenannten Burst, bilden, wobei eine Schädigung vorzugsweise mittels eines Bursts erzeugt wird.

Ein solches Pulspaket weist im Allgemeinen eine etwas größere Energie auf, als ein Einzelpuls im üblichen Single-Shot-Betrieb. Die Pulse eines Bursts selbst beinhalten aber deutlich weniger Energie als ein Einzelpuls. Hinsichtlich der Pulse innerhalb eines Bursts kann vorgesehen sein, dass die Pulsenergien flexibel einstellbar sind, insbesondere, dass die Pulsenergien entweder im Wesentlichen konstant bleiben oder dass die Pulsenergien zunehmen oder dass die Pulsenergien abnehmen.

Eine geeignete Laserquelle gemäß der vorliegenden Erfindung ist ein Neodym-dotierter Yttrium-Aluminium-Granat-Laser mit einer Wellenlänge von 1064 Nanometern.

Die Laserquelle erzeugt beispielsweise einen Rohstrahl mit einem (1/e²)-Durchmesser von 12mm, als Optik kann eine Bikonvex-Linse mit einer Brennweite von 16mm zum Einsatz kommen. Zur Erzeugung des Rohstrahls kann ggf. eine geeignete strahlformende Optik, wie beispielsweise ein Galilei-Teleskop zum Einsatz kommen.

Die Laserquelle arbeitet insbesondere mit einer Repetitionsrate, welche zwischen 1 kHz und 1000 kHz, vorzugsweise zwischen 10 kHz und 400 kHz, besonders bevorzugt zwischen 30 kHz und 200 kHz.

Die Repetitionsrate und/oder die Scangeschwindigkeit kann dabei so gewählt werden, dass der gewünschte Abstand benachbarter filamentförmiger Schädigungen erreicht wird.

Die geeignete Pulsdauer eines Laserpulses liegt in einem Bereich von weniger als 100 Pikosekunden, bevorzugt bei weniger als 20 Pikosekunden.

Die typische Leistung der Laserquelle liegt dabei besonders günstig in einem Bereich von 20 bis 300 Watt. Um die filamentförmigen Schädigungen zu erzielen, wird gemäß einer vorteilhaften Weiterbildung der Erfindung eine Pulsenergie im Burst von mehr als 400 Mikrojoule eingesetzt, ferner vorteilhaft eine gesamte Burstenergie von mehr als 500 Mikrojoule.

Beim Betriebs des Ultrakurzpuls-Lasers im Burst-Modus ist die Repetitionsrate die Wiederholrate der Abgabe von Bursts. Die Pulsdauer ist im Wesentlichen unabhängig davon, ob ein Laser im Einzelpulsbetrieb oder im Burst-Mode betrieben wird. Die Pulse innerhalb eines Bursts weisen typischerweise eine ähnliche Pulslänge auf, wie ein Puls im Einzelpulsbetrieb. Die Burstfrequenz kann im Intervall [15 MHz, 90 MHz] liegen, bevorzugt im Intervall [20 MHz, 85 MHz] liegen und beträgt beispielsweise 50 MHz und die Anzahl der Pulse im Burst kann zwischen 1 und 10 Pulsen, z.B. 6 Pulsen liegen.

Im Rahmen der Erfindung wird beim Einbringen der Schädigungen der mittlere Abstand zwischen benachbarten Schädigungen und die Anzahl der Laserpulse zur Erzeugung jeweils einer der Schädigungen im Hinblick auf die Bruchspannung σ_{B} und die Kantenfestigkeit σ_{K} ausgewählt.

Die Anzahl der Laserpulse zur Erzeugung jeweils einer Schädigung wird dabei insbesondere aus dem Intervall [1, 20], vorzugsweise aus dem Intervall [1, 10], besonders bevorzugt aus dem Intervall [2, 8] gewählt.

Der mittlere Abstand zwischen benachbarten Schädigungen wird insbesondere aus dem Intervall [1µm, 10µm], vorzugsweise aus dem Intervall [3µm, 8µm], besonders bevorzugt aus dem Intervall [5µm, 7µm] gewählt. Die Intervalle sind insbesondere kontinuierlich zu verstehen, wobei in einer Ausführungsform der Erfindung auch vorgesehen sein kann, dass es sich um diskrete Intervalle handelt. Vorzugsweise ist die Standardabweichung der Abstände benachbarten Schädigungen kleiner als 1µm.

Mit diesen Abständen, wobei insbesondere relativ hohe Abstände zwischen den einzelnen Filamenten von > 5 µm, bevorzugt > 7 µm, vorgesehen sind, kann mittels der Filamentierung die geeignete Bruchspannung eingestellt werden, wie aus der unten näher aufgeführten Versuchsreihe hervorgeht.

Dass bevorzugt relativ hohe Abstände gewählt werden ist insofern überraschend, als dass man bisher davon ausgegangen ist, dass mit zunehmenden Abständen die Bruchkraft stetig zunimmt. Dieser Zusammenhang hat sich jedoch nicht bewahrheitet, wie unten gezeigt wird. Es wird davon ausgegangen, dass erst ab Abständen von mehr als 8 µm die Annahme steigender Bruchkraft wieder zutrifft.

Da dieser Effekt im Gegensatz zum Burst oder der Burstabstand auch positiven Einfluss auf die Kantenrauigkeit hat, ist ein hoher Abstand der Filamente besonders vorteilhaft. Mit anderen Worten führen hohe Abstände der Schädigungen zu glatteren Kanten. Insofern ist die Wahl höherer Filamentabstände vorteilhaft. Desweitern hat dies einen positiven Einfluss auf die Geschwindigkeit, da mit Lasern gleicher Frequenz so deutlich höhere Schneidgeschwindigkeiten erreicht werden können.

In einer ersten spezielleren Ausführungsform der Erfindung weist das Material des Substrats einen thermischen Ausdehnungskoeffizienten im Intervall [3·10⁻⁶ K⁻¹, 4·10⁻⁶ K⁻¹], einen Elastizitätsmodul im Intervall [69 kN/mm², 76 kN/mm²] und/oder eine Glasübergangstemperatur im Intervall [700°C, 800°C] auf.

In dieser ersten spezielleren Ausführungsform wird der mittlere Abstand zwischen benachbarten Schädigungen gewählt aus dem Intervall [6µm, 8µm] und die Anzahl der Laserpulse zur Erzeugung jeweils einer Schädigung aus dem Intervall [7, 9].

In einer zweiten spezielleren Ausführungsform der Erfindung weist das Material des Substrats einen thermischen Ausdehnungskoeffizienten im Intervall [7·10⁻⁶ K⁻¹, 8·10⁻⁶ K⁻¹], einen Elastizitätsmodul im Intervall [69 kN/mm², 76 kN/mm²] und/oder eine Glasübergangstemperatur im Intervall [500°C, 600°C] auf.

In dieser zweiten spezielleren Ausführungsform wird der mittlere Abstand zwischen benachbarten Schädigungen gewählt aus dem Intervall [6 µm, 8 µm] und die Anzahl der Laserpulse zur Erzeugung jeweils einer Schädigung aus dem Intervall [1, 3].

In einer dritten spezielleren Ausführungsform der Erfindung weist das Material des Substrats einen thermischen Ausdehnungskoeffizienten im Intervall [3·10⁻⁶ K⁻¹, 4·10⁻⁶ K⁻¹], einen Elastizitätsmodul im Intervall [60 kN/mm², 68 kN/mm²] und/oder eine Glasübergangstemperatur im Intervall [500°C, 600°C] auf.

In dieser dritten spezielleren Ausführungsform wird der mittlere Abstand zwischen benachbarten Schädigungen entweder gewählt aus dem Intervall [4µm, 8µm] und die Anzahl der Laserpulse zur Erzeugung jeweils einer Schädigung aus dem Intervall [7, 9] oder der mittlere Abstand zwischen benachbarten Schädigungen wird gewählt aus dem Intervall [6µm, 8µm] und die Anzahl der Laserpulse zur Erzeugung jeweils einer Schädigung aus dem Intervall [3, 5].

Unabhängig von den drei vorgenannten spezielleren Ausführungsformen und ggf. in Kombination mit diesen spezielleren Ausführungsformen kann das Substrat Material eines bestimmten Glas-Typs und/oder einer bestimmten Glas-Zusammensetzungen umfassen oder daraus gefertigt sein.

Beispielsweise kann das Substrat ein Lithiumaluminosilikatglas mit der nachfolgenden Zusammensetzung (in Gew.-%) sein:

| Zusammensetzung | (Gew.-%) |
|---|---|
| SiO₂ | 55-69 |
| Al₂O₃ | 18-25 |
| Li₂O | 3-5 |
| Na₂O + K₂O | 0-30 |
| MgO + CaO +SrO + BaO | 0-5 |
| ZnO | 0-4 |
| TiO₂ | 0-5 |
| ZrO₂ | 0-5 |
| TiO₂ + ZrO₂ + SnO₂ | 2-6 |
| P₂O₅ | 0-8 |
| F | 0-1 |
| B₂O₃ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 3·10⁻⁶ K⁻¹ und 6·10⁻⁶ K⁻¹ oder zwischen 3,3·10⁻⁶ K⁻¹ und 5,7·10⁻⁶ K⁻¹ aufweisen.

Bevorzugt weist das Lithiumaluminosilikatglas die nachfolgende Zusammensetzung (in Gew.-%) auf:

| Zusammensetzung | (Gew.-%) |
|---|---|
| SiO₂ | 57-66 |
| Al₂O₃ | 18-23 |
| Li₂O | 3-5 |
| Na₂O + K₂O | 3-25 |
| MgO + CaO +SrO + BaO | 1-4 |
| ZnO | 0-4 |
| TiO₂ | 0-4 |
| ZrO₂ | 0-5 |
| TiO₂ + ZrO₂ + SnO₂ | 2-6 |
| P₂O₅ | 0-7 |
| F | 0-1 |
| B₂O₃ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 4,5·10⁻⁶ K⁻¹ und 6·10⁻⁶ K⁻¹ oder zwischen 4,76·10⁻⁶ K⁻¹ und 5,7·10⁻⁶ K⁻¹ aufweisen.

Das Lithiumaluminosilikatglas weist noch bevorzugter die nachfolgende Zusammensetzung (in Gew.-%) auf:

| Zusammensetzung | (Gew.-%) |
|---|---|
| SiO₂ | 57-63 |
| Al₂O₃ | 18-22 |
| Li₂O | 3.5-5 |
| Na₂O + K₂O | 5-20 |
| MgO + CaO +SrO + BaO | 0-5 |
| ZnO | 0-3 |
| TiO₂ | 0-3 |
| ZrO₂ | 0-5 |
| TiO₂ + ZrO₂ + SnO₂ | 2-5 |
| P₂O₅ | 0-5 |
| F | 0-1 |
| B₂O₃ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 4·10⁻⁶ K⁻¹ und 8·10⁻⁶ K⁻¹ oder zwischen 5·10⁻⁶ K⁻¹ und 7·10⁻⁶ K⁻¹ aufweisen. Es kann auch eine entsprechende Glaskeramik vorgesehen sein welche einen thermischen Ausdehnungskoeffizienten zwischen -0,068·10⁻⁶ K⁻¹ und 1,16·10⁻⁶ K⁻¹ aufweist.

In einem anderen Beispiel kann das Substrat ein Kalknatronglas mit der nachfolgenden Zusammensetzung (in Gew.-%) sein:

| Zusammensetzung | (Gew.-%) |
|---|---|
| SiO₂ | 40-81 |
| Al₂O₃ | 0-6 |
| B₂O₃ | 0-5 |
| Li₂O + Na₂O + K₂O | 5-30 |
| MgO + CaO + SrO + BaO + ZnO | 5-30 |
| TiO₂ +ZrO₂ | 0-7 |
| P₂O₅ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 5,25·10⁻⁶ K⁻¹ und 10*10⁻⁶ K⁻¹ oder zwischen 5,53·10⁻⁶ K⁻¹ und 9,77·10⁻⁶ K⁻¹ aufweisen.

Das Kalknatronglas weist bevorzugt die nachfolgende Zusammensetzung (in Gew.-%) auf:

| Zusammensetzung | (Gew.-%) |
|---|---|
| SiO₂ | 50-81 |
| Al₂O₃ | 0-5 |
| B₂O₃ | 0-5 |
| Li₂O + Na₂O + K₂O | 5-28 |
| MgO + CaO + SrO + BaO + ZnO | 5-25 |
| TiO₂ +ZrO₂ | 0-6 |
| P₂O₅ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 4,5·10⁻⁶ K⁻¹ und 11·10⁻⁶ K⁻¹ oder zwischen 4,94·10⁻⁶ K⁻¹ und 10,25·10⁻⁶ K⁻¹ aufweisen.

Das Kalknatronglas weist noch bevorzugter die nachfolgende Zusammensetzung (in Gew.-%) auf:

| Zusammensetzung | (Gew.-%) |
|---|---|
| SiO₂ | 55-76 |
| Al₂O₃ | 0-5 |
| B₂O₃ | 0-5 |
| Li₂O + Na₂O + K₂O | 5-25 |
| MgO + CaO + SrO + BaO + ZnO | 5-20 |
| TiO₂ +ZrO₂ | 0-5 |
| P₂O₅ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 4,5·10⁻⁶ K⁻¹ und 11·10⁻⁶ K⁻¹ oder zwischen 4,93·10⁻⁶ K⁻¹ und 10,25·10⁻⁶ K⁻¹ aufweisen.

In einem weiteren Beispiel ist das Substrat ein Borosilikatglas mit der nachfolgenden Zusammensetzung (in Gew.-%):

| Zusammensetzung | (Gew.-%) |
|---|---|
| SiO₂ | 60-85 |
| Al₂O₃ | 0-10 |
| B₂O₃ | 5-20 |
| Li₂O + Na₂O + K₂O | 2-16 |
| MgO + CaO + SrO + BaO + ZnO | 0-15 |
| TiO₂ + ZrO₂ | 0-5 |
| P₂O₅ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 2,75·10⁻⁶ K⁻¹ und 10·10⁻⁶ K⁻¹ oder zwischen 3,0·10⁻⁶ K⁻¹ und 9,01·10⁻⁶ K⁻¹ aufweisen.

Das Borosilikatglas weist bevorzugter die nachfolgende Zusammensetzung (in Gew.-%) auf:

| Zusammensetzung | (Gew.-%) |
|---|---|
| SiO₂ | 63-84 |
| Al₂O₃ | 0-8 |
| B₂O₃ | 5-18 |
| Li₂O + Na₂O + K₂O | 3-14 |
| MgO + CaO + SrO + BaO + ZnO | 0-12 |
| TiO₂ + ZrO₂ | 0-4 |
| P₂O₅ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 2,5·10⁻⁶ K⁻¹ und 8·10⁻⁶ K⁻¹ oder zwischen 2,8·10⁻⁶ K⁻¹ und 7,5·10⁻⁶ K⁻¹ aufweisen.

Das Borosilikatglas weist noch bevorzugter die nachfolgende Zusammensetzung (in Gew.-%) auf:

| Zusammensetzung | (Gew.-%) |
|---|---|
| SiO₂ | 63-83 |
| Al₂O₃ | 0-7 |
| B₂O₃ | 5-18 |
| Li₂O + Na₂O + K₂O | 4-14 |
| MgO + CaO + SrO + BaO + ZnO | 0-10 |
| TiO₂ + ZrO₂ | 0-3 |
| P₂O₅ | 0-2 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 3,0·10⁻⁶ K⁻¹ und 8·10⁻⁶ K⁻¹ oder zwischen 3,18·10⁻⁶ K⁻¹ und 7,5·10⁻⁶ K⁻¹ aufweisen.

In einem weiteren Beispiel ist das Substrat ein Alkalimetallaluminosilikatglas mit der nachfolgenden Zusammensetzung (in Gew.-%):

| Zusammensetzung | (Gew.-%) |
|---|---|
| SiO₂ | 40-75 |
| Al₂O₃ | 10-30 |
| B₂O₃ | 0-20 |
| Li₂O + Na₂O + K₂O | 4-30 |
| MgO + CaO + SrO + BaO + ZnO | 0-15 |
| TiO₂ + ZrO₂ | 0-15 |
| P₂O₅ | 0-10 |

Gegebenenfalls können färbende Oxide zugegeben werden, wie Nd₂O₃, Fe₂O₃, CoO, NiO, V2O5, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 3,0·10⁻⁶ K⁻¹ und 11·10⁻⁶ K⁻¹ oder zwischen 3,3·10⁻⁶ K⁻¹ und 10·10⁻⁶ K⁻¹ aufweisen.

Das Alkalimetallaluminosilikatglas weist bevorzugter die nachfolgende Zusammensetzung (in Gew.-%) auf:

| Zusammensetzung | (Gew.-%) |
|---|---|
| SiO₂ | 50-70 |
| Al₂O₃ | 10-27 |
| B₂O₃ | 0-18 |
| Li₂O + Na₂O + K₂O | 5-28 |
| MgO + CaO + SrO + BaO + ZnO | 0-13 |
| TiO₂ + ZrO₂ | 0-13 |
| P₂O₅ | 0-9 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 3,75·10⁻⁶ K⁻¹ und 11·10⁻⁶ K⁻¹ oder zwischen 3,99·10⁻⁶ K⁻¹ und 10,22·10⁻⁶ K⁻¹ aufweisen.

Das Alkalialuminosilikatglas weist noch bevorzugter die nachfolgende Zusammensetzung (in Gew.-%) auf:

| Zusammensetzung | (Gew.-%) |
|---|---|
| SiO₂ | 55-68 |
| Al₂O₃ | 10-27 |
| B₂O₃ | 0-15 |
| Li₂O + Na₂O + K₂O | 4-27 |
| MgO + CaO + SrO + BaO + ZnO | 0-12 |
| TiO₂ +ZrO₂ | 0-10 |
| P₂O₅ | 0-8 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 4,0·10⁻⁶ K⁻¹ und 10·10⁻⁶ K⁻¹ oder zwischen 4,5·10⁻⁶ K⁻¹ und 9,08·10⁻⁶ K⁻¹ aufweisen.

In einem weiteren Beispiel ist das Substrat ein Aluminosilikatglas mit niedrigem Alkaligehalt mit der nachfolgenden Zusammensetzung (in Gew.-%):

| Zusammensetzung | (Gew.-%) |
|---|---|
| SiO₂ | 50-75 |
| Al₂O₃ | 7-25 |
| B₂O₃ | 0-20 |
| Li₂O + Na₂O + K₂O | 0-4 |
| MgO + CaO +SrO + BaO + ZnO | 5-25 |
| TiO₂+ZrO₂ | 0-10 |
| P₂O₅ | 0-5 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 2,5·10⁻⁶ K⁻¹ und 7·10⁻⁶ K⁻¹ oder zwischen 2,8·10⁻⁶ K⁻¹ und 6,5·10⁻⁶ K⁻¹ aufweisen.

Das Aluminosilikatglas mit niedrigem Alkaligehalt weist bevorzugter die nachfolgende Zusammensetzung (in Gew.-%) auf:

| Zusammensetzung | (Gew.-%) |
|---|---|
| SiO₂ | 52-73 |
| Al₂O₃ | 7-23 |
| B₂O₃ | 0-18 |
| Li₂O + Na₂O + K₂O | 0-4 |
| MgO + CaO +SrO + BaO + ZnO | 5-23 |
| TiO₂+ZrO₂ | 0-10 |
| P₂O₅ | 0-5 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 2,5·10⁻⁶ K⁻¹ und 7·10⁻⁶ K⁻¹ oder zwischen 2,8·10⁻⁶ K⁻¹ und 6,5·10⁻⁶ K⁻¹ aufweisen.

Das Aluminosilikatglas mit niedrigem Alkaligehalt weist noch bevorzugter die nachfolgende Zusammensetzung (in Gew.-%) auf:

| Zusammensetzung | (Gew.-%) |
|---|---|
| SiO₂ | 53-71 |
| Al₂O₃ | 7-22 |
| B₂O₃ | 0-18 |
| Li₂O + Na₂O + K₂O | 0-4 |
| MgO + CaO +SrO + BaO + ZnO | 5-22 |
| TiO₂ + ZrO₂ | 0-8 |
| P₂O₅ | 0-5 |

Gegebenenfalls können färbende Oxide zugegeben werden, wie Nd₂O₃, Fe₂O₃, CoO, NiO, V₂O₅, MnO₂, TiO₂, CuO, CeO₂, Cr₂O₃, 0 - 2 Gew.-% As₂O₃, Sb₂O₃, SnO₂, SO₃, Cl, F und/oder CeO₂ können als Läutermittel zugegeben werden, und 0 - 5 Gew.-% Seltenerdoxide können ebenfalls zugegeben werden, um magnetische, Photonen- oder optische Funktionen in die Glaslage oder -platte einzuführen, und die Gesamtmenge der Gesamtzusammensetzung beträgt 100 Gew.-%.

Insbesondere kann ein Material der vorgenannten Zusammensetzung einen thermischen Ausdehnungskoeffizienten zwischen 2,5·10⁻⁶ K⁻¹ und 7·10⁻⁶ K⁻¹ oder zwischen 2,8·10⁻⁶ K⁻¹ und 6,5·10⁻⁶ K⁻¹ aufweisen.

Das Substrat kann auch eine Dicke von kleiner 350 µm, vorzugsweise von kleiner 250 µm, bevorzugt von kleiner 100 µm, besonders bevorzugt von kleiner 50 µm und bevorzugt von mindestens 3 µm, vorzugsweise von mindestens 10 µm, besonders bevorzugt von mindestens 15 µm aufweisen. Bevorzugte Substratdicken sind 5, 10, 15, 25, 30, 35, 50, 55, 70, 80, 100, 130, 145, 160, 190, 210 oder 280 µm. Insbesondere kann das Substrat als Dünnglasband bzw. als Glasfolie ausgebildet sein.

Zum besseren Verständnis der Erfindung sei genannt allgemeiner gesprochen ein Verfahren zum Trennen eines Substrats insbesondere eines Substrats aus sprödhartem Material, speziell aus Glas, Glaskeramik oder Silizium, umfassend die folgenden Verfahrensschritte.
a) Bereitstellen zumindest eines flächigen Substrats, insbesondere eines Glaselements, eines Glaskeramikelements oder eines Siliziumelements, mit zumindest einem bekannten Materialkennwert, insbesondere dem thermischen Ausdehnungskoeffizienten, dem Elastizitätsmodul und/oder der Glasübergangstemperatur und/oder zumindest einer bekannten Substrateigenschaft, insbesondere dem Transmissionsgrad, z.B. für das Laserlicht, und/oder der mittleren Rauheit Rₐ zumindest einer der Substratoberflächen.
b) Festlegen zumindest eines Prozessparameters, insbesondere eines Schädigungsabstands, einer Laserpulsanzahl und/oder einer Burstfrequenz, in Abhängigkeit des zumindest einen bekannten Materialkennwerts und/oder der zumindest einen bekannten Substrateigenschaft.
c) Einbringen voneinander beabstandeter Schädigungen entlang einer vorbestimmten Trennlinie mittels Laserpulsen eines Lasers in das flächige Substrat entsprechend des zumindest einen festgelegten Prozessparameters.

Vorzugsweise kann vorgesehen sein, dass die Transmission des Substrats, insbesondere für den gepulsten Laserstrahl, höher ist als 70 %, bevorzugt höher ist 80 %, besonders bevorzugt höher ist als 85 %. Ferner ist vorzugsweise die mittlere Rauheit Rₐ geringer als 0,5 µm, bevorzugt geringer als 0,4 µm, besonders bevorzugt geringer als 0,35 µm.

Die Erfindung betrifft auch ein Werkstück aus Glas, Glaskeramik und/oder Silizium, insbesondere ein Glasprodukt, ein Glaskeramikprodukt oder ein Siliziumprodukt, das entlang einer Trennlinie vorgeschädigt ist, dadurch gekennzeichnet, dass das Werkstück entlang der Trennlinie voneinander beabstandet Schädigungen aufweist und dass die Bruchspannung σ_{B} zum Trennen des Werkstücks entlang der Trennlinie kleiner ist als eine von dem jeweiligen Werkstück abhängige erste Referenzspannung σ_{R1} und dass die Kantenfestigkeit σ_{K} der nach dem Trennen erhaltenen Trennkante größer ist als eine von dem jeweiligen Werkstück abhängige zweite Referenzspannung σ_{R2}.

Erfindungsgemäß ist vorgesehen, dass (A) sowohl die erste als auch die zweite Referenzspannung σ_{R1} = σ_{R2} vorgegeben sind als eine vom Material des Werkstücks abhängige maximale thermische Spannung σₜₕ oder bei einem chemisch oder thermisch vorgespannten Substrat als eine durch die Eigenschaften des vorgespannten Werkstücks definierte innere Zugspannung σ_{CT}, wobei im ersten Fall die maximale thermische Spannung σₜₕ nach der Formel σₜₕ = 0,5·α·E·(T_{g}-100°C) bestimmbar ist, wobei α den thermischen Ausdehnungskoeffizienten des Materials des Werkstücks bezeichnet, E den Elastizitätsmodul des Materials des Werkstücks bezeichnet und T_{g} die Glasübergangstemperatur des Materials des Werkstücks bezeichnet und wobei im zweiten Fall bei einem chemisch vorgespannten Substrat die innere Zugspannung σ_{CT} nach der Formel σ_{CT} = (σ_{CS}·d_{L})/(d-2d_{L}) oder bei einem thermisch vorgespannten Substrat nach der Formel σ_{CT} = σ_{CS}/2 bestimmbar ist, wobei σ_{CS} die Oberflächendruckspannung des vorgespannten Werkstücks, d_{L} die Eindringtiefe der Vorspannung und d die Dicke des Werkstücks bezeichnet, oder dass (B) für die erste Referenzspannung σ_{R1} ≤ C_{R1}·α·E·(T_{g}-100°C) gilt und für die zweite Referenzspannung σ_{R2} ≥ C_{R2}· α ·E·(T_{g}-100°C) gilt, wobei C_{R1} und C_{R2} Referenzspannungskoeffizienten mit C_{R1}=0,5/k und C_{R2}=0,5*k und k=1,5, vorzugsweise k=2, besonders bevorzugt k=2,5 sind und wobei α den thermischen Ausdehnungskoeffizienten des Materials des Werkstücks bezeichnet, E den Elastizitätsmodul des Materials des Werkstücks bezeichnet und T_{g} die Glasübergangstemperatur des Materials des Werkstücks bezeichnet.Im Fall (A) ist demnach vorgesehen, dass sowohl die erste als auch die zweite Referenzspannung vorgegeben sind als eine vom Material des Werkstücks abhängige maximale thermische Spannung σ_{R1} = σ_{R2} = σₜₕ, wobei die maximale thermische Spannung σₜₕ nach der Formel σₜₕ = 0,5·α·E·(T_{g}-100°C) bestimmbar ist.

Im Fall (B) ist vorgesehen, dass für die erste Referenzspannung σ_{R1} ≤ C_{R1}· α ·E·(T_{g}-100°C) gilt und für die zweite Referenzspannung
σ_{R2} ≥ C_{R2}· α ·E·(T_{g}-100°C), wobei C_{R1} und C_{R2} Referenzspannungskoeffizienten mit C_{R1}=0,5/k und C_{R2}=0,5·k und k=1,5, vorzugsweise k=2, besonders bevorzugt k=2,5 sind.

Die vorstehend beschriebenen Werkstücke sind vorzugsweise nicht vorgespannt. Es kann allerdings auch ein vorgespanntes Werkstück, insbesondere aus Glas vorgesehen sein.

Im Fall eines vorgespannten Werkstücks ist vorgesehen, dass die erste und die zweite Referenzspannung identisch sind und vorgegeben sind als eine durch die Eigenschaften des vorgespannten Werkstücks definierte innere Zugspannung, d.h. σ_{R1} = σ_{R2} = σ_{CT}. Im Fall, dass das Werkstück chemisch vorgespannt ist, ist die innere Zugspannung σ_{CT} nach der Formel σ_{CT} = (σ_{CS}·d_{L})/(d-2d_{L}) bestimmbar. Im Fall, dass das Werkstück thermisch vorgespannt ist, ist die innere Zugspannung σ_{CT} nach der Formel σ_{CT} = σ_{CS}/2 bestimmbar.

Nachfolgend wird auf die beigeschlossenen Figuren Bezug genommen. In den Figuren bezeichnen gleiche Bezugszeichen gleiche oder entsprechende Elemente.

Es zeigen:
Fig. 1: Versuchsergebnisse der Bruchspannung σ_{B} und Kantenfestigkeit σ_{K} in MPa für SCHOTT AF32^{®} Glas mit Schädigungen entlang einer Trennlinie für verschiedene Abstände A zwischen benachbarten Schädigungen und verschiedene Anzahlen L der Laserpulse zur Erzeugung jeweils einer Schädigung,
Fig. 2: Versuchsergebnisse der Bruchspannung σ_{B} und Kantenfestigkeit σ_{K} in MPa für SCHOTT D263^{®} Glas mit Schädigungen entlang einer Trennlinie für verschiedene Abstände A zwischen benachbarten Schädigungen und verschiedene Anzahlen L der Laserpulse zur Erzeugung jeweils einer Schädigung,
Fig. 3: Versuchsergebnisse der Bruchspannung σ_{B} und Kantenfestigkeit σ_{K} in MPa für SCHOTT BOROFLOAT^{®} 33 Glas mit Schädigungen entlang einer Trennlinie für verschiedene Abstände A zwischen benachbarten Schädigungen und verschiedene Anzahlen L der Laserpulse zur Erzeugung jeweils einer Schädigung,
Fig. 4: Versuchsergebnisse der Kantenrauheit in MPa für SCHOTT BOROFLOAT^{®} 33 Glas mit Schädigungen entlang einer Trennlinie für verschiedene Abstände A zwischen benachbarten Schädigungen und verschiedene Anzahlen L der Laserpulse zur Erzeugung jeweils einer Schädigung,
Fig. 5: ein Werkstück mit zwei einander kreuzenden Trennlinien,
Fig. 6 ein Werkstück mit zwei Gruppen von sich kreuzenden Trennlinien,
Fig. 7 ein aus einem Werkstück herausgeteiltes Element,
Fig. 8 eine Variante des in Fig. 6 dargestellten Ausführungsbeispiels mit einem Steg zum Zusammenhalten des streifenweise aufgetrennten Werkstücks,
Fig. 9 und Fig. 10 Varianten des in Fig. 6 dargestellten Ausführungsbeispiels mit einem Rahmen zum Zusammenhalten des streifenweise aufgetrennten Werkstücks,
Fig. 11 ein Werkstück auf einem Träger,
Fig. 12 eine Ausführungsform eines in mehrere Teilstücke untergliederten Werkstücks.

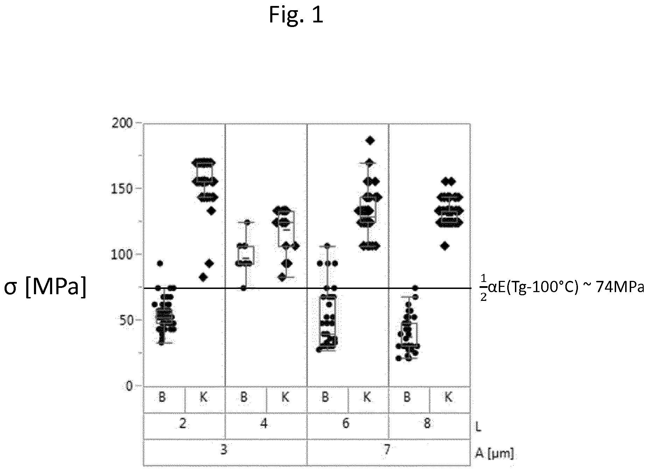

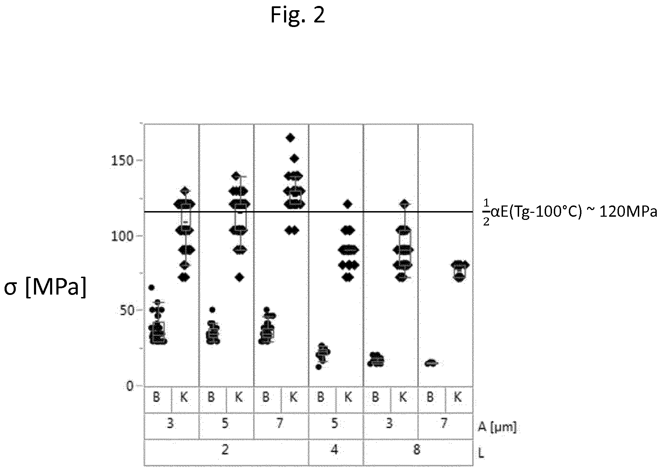

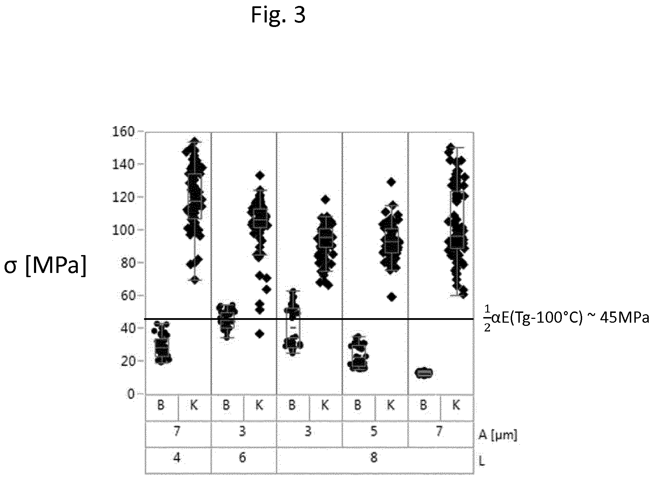

Bezugnehmend auf die Fig. 1 bis 3 sind die Ergebnisse einer DOE-Versuchreihe für drei verschiedene Gläser, nämlich SCHOTT AF32^{®} (Fig. 1), SCHOTT D263^{®} (Fig. 2) und SCHOTT BOROFLOAT^{®} 33 (Fig. 3) dargestellt.

Hierbei handelt es sich um eine Auswahl an Beispielen. Allgemein kann die Erfindung für verschiedene Substrate, insbesondere aus Glas, Glaskeramik und/oder Silizium mit Filamentierung eingesetzt werden, insbesondere auch für Materialen mit geringem thermischem Ausdehnungskoeffizienten.

Es wurde für eine Vielzahl von Proben dieser Gläser jeweils eine Filamentierung vorgenommen, d.h. mit Laserpulsen eines Lasers voneinander beabstandete Schädigungen entlang einer Trennlinie in das Volumen der jeweiligen Probe eingebracht.

Für die Proben aus SCHOTT AF32^{®} bzw. SCHOTT D263^{®} wurden insbesondere Substratdicken von ca. 100 µm gewählt und für die Proben aus SCHOTT BOROFLOAT^{®} 33 wurden insbesondere Substratdicken von 1 mm gewählt.

Nach der Filamentierung wurde jeweils die Bruchfestigkeit σ_{B} des Glases in Bezug auf die filamentierte Trennlinie geprüft. Mit anderen Worten wurden die Proben entlang der Trennlinie getrennt, wobei die zur Trennung erforderliche Bruchspannung gemessen und protokolliert wurde. Hierzu wurde je nach Materialdicke das 4-Punkt-Biegefestigkeits-Prüfverfahren nach DIN EN 843-1 (dickere Gläser) bzw. eine Bestimmung der Bruchfestigkeit gemäß der DE 10 2014 110 855 A1 (dünnere Gläser) mit einer Stufenwalze durchgeführt. Die DE 10 2014 110 855 A1 beschreibt ein Verfahren und eine Vorrichtung zur Bestimmung der Bruchfestigkeit der Ränder dünner Bahnen sprödbrüchigen Materials.

In einem nächsten Schritt wurde für jede der Proben die nach dem Trennen erhaltene Trennkante auf ihre Festigkeit geprüft. Zur Bestimmung der jeweiligen Kantenfestigkeit σ_{K} wurden die Proben jeweils wiederum je nach Materialdicke mittels der Verfahren nach DIN EN 843-1 (dickere Gläser) bzw. DE 10 2014 110 855 A1 (dünnere Gläser) geprüft und die Ergebnisse gemessen und protokolliert.

Die auf diese Weise erhaltenen Bruchspannungen σ_{B} und Kantenfestigkeiten σ_{K} sind in den Fig. 1 bis 3 auf der Ordinatenachse in Einheiten von MPa abgetragen. Die Bruchspannungen σ_{B} sind am Fuß der Darstellung durch B gekennzeichnet, die Kantenfestigkeiten σ_{K} entsprechend durch K.

Die Laser-Filamentierung wurde zudem mit unterschiedlichen Parametern durchgeführt, d.h. es wurden verschieden perforierte Proben erzeugt. Variiert wurden die Abstände zwischen benachbarten Schädigungen und die Anzahlen der Laserpulse zur Erzeugung jeweils einer Schädigung. Diese Parameter wurden jeweils für eine Probe eingestellt und während der Filamentierung einer bestimmten Probe konstant gehalten.

In den Fig. 1 bis 3 sind die Bruchspannungen σ_{B} und Kantenfestigkeiten σ_{K} demnach dargestellt für die verschiedenen Parameter der Laser-Filamentierung, welche auf der Abzissenachse aufgetragen sind. Hierbei sind mit A die Abstände zwischen benachbarten Schädigungen in Mikrometer und mit L die Laserpuls-Anzahl zur Erzeugung jeweils einer Schädigung bezeichnet.

Basierend auf den dargestellten Versuchsergebnissen kann verifiziert werden, dass es für einen sich der Filamentierung anschließenden Cleaving-Schritt besonders günstig ist, die Prozessparameter A und L der Filamentierung im Hinblick auf die Bruchspannung σ_{B} für ein Trennen entlang der Trennlinie und auf die Kantenfestigkeit σ_{K} der nach dem Trennen erhaltenen Trennkante einzustellen.

Verfiziert werden kann im Folgenden insbesondere die Erkenntnis, dass es sich als besonders günstig herausgestellt hat, die Bruchspannung σ_{B} zum Trennen des Glases entlang der Trennlinie kleiner als eine von dem jeweiligen Glas abhängige erste Referenzspannung σ_{R1} und die Kantenfestigkeit σ_{K} der nach dem Trennen erhaltenen Trennkante größer als eine von dem jeweiligen Glas abhängige zweite Referenzspannung σ_{R2} einzustellen, wobei sich beispielsweise insbesondere als vorteilhaft gezeigt hat, wenn σ_{R1} = σ_{R2} = σₜₕ gilt, wobei σₜₕ die maximale thermische Spannung ist, welche z.B. angenommen werden kann als σₜₕ = 0,5·α·E·(T_{g}-100°C).

In den Fig. 1 bis 3 ist die für das jeweilige Glas so bestimmte maximale thermische Spannung 0,5· α ·E·(T_{g}-100°C) berechnet worden und als horizontale Linie eingezeichnet.

Es zeigt sich, dass dieser Wert für alle drei Gläser, d.h. SCHOTT AF32^{®} (Fig. 1), SCHOTT D263^{®} (Fig. 2) und SCHOTT BOROFLOAT^{®} 33 (Fig. 3), in der Größenordnung der gemessenen Bruchspannungen σ_{B} und Kantenfestigkeiten σ_{K} liegt und dass sich daher die Möglichkeit ergibt, die Prozessparameter A und L im Hinblick auf diesen Wert optimiert auszuwählen.

Aus den in den Fig. 1 dargestellten Versuchsergebnissen, welche sich auf SCHOTT AF32^{®} Glas beziehen, lässt sich erkennen, dass insbesondere ein Schädigungs-Abstand von 7µm in Kombination mit einer Laserpulsanzahl von 8 besonders geeignet ist, insbesondere um in Bezug auf den Wert 0,5· α ·E·(T_{g}-100°C) die Bruchspannung σ_{B} zu minimieren und andererseits die Kantenfestigkeiten σ_{K} zu maximieren.

Für das SCHOTT-Glas D263^{®} kann Fig. 2 entnommen werden, dass ein Schädigungs-Abstand von 7µm in Kombination mit einer Laserpulsanzahl von 2 besonders geeignete Parameter sind.

Fig. 3 kann für das SCHOTT-Glas BOROFLOAT^{®} 33 entnommen werden, dass entweder die Kombination von Pulsanzahl 4 und Schädigungs-Abstand 7µm oder aber die Kombination von Pulsanzahl 8 und Schädigungs-Abstands 5µm oder 7µm besonders geeignete Parameter darstellen.

Es kann demnach durch die Optimierung der Filamente hinsichtlich Bruchspannung der anschließende Trennprozess (Cleaving-Schritt) durch thermisch induzierte Spannungen optimiert durchgeführt werden.

Die Versuche zeigen insbesondere, dass überraschend Perforationen mit größerem Abstand materialübergreifend Vorteile bei der Trennbarkeit mit sich bringen.

Dazu zählt eine höhere Prozesssicherheit: Selbst bei grenzwertigen Prozessfenstern, d.h. Prozessen mit Parameterbereichen, die aus dem Stand der Technik heraus bisher nicht sicher geführt werden konnten, können mit dem erfindungsgemäßen Verfahren die Substrate sicher getrennt werden.

Zudem kann der Laser mit reduzierter Leistung betrieben werden und/oder die Verfahrgeschwindigkeit (Vorschubgeschwindigkeit) des Lasers kann angepasst, insbesondere erhöht werden. So konnte z.B. bei Materialien mit einem Perforationsabstand von 5 µm mit einem Prozesssetting mit Vorschub von 40 mm/s die Laserleistung von 110 W auf 75 W gesenkt werden.

In einem Anwendungsbeispiel wurde eine Probe aus SCHOTT BOROFLOAT^{®} 33, 1mm Dicke, CTE von 3,3·10⁻⁶ K⁻¹, mit 7µm Abstand der Schädigungen und 6 Laserpulsen zur Erzeugung jeweils einer Schädigung mit 300 kHz und einer Vorschubgeschwindigkeit von 2100 mm/s filamentiert.

Ein weiterer Vorteil ergibt sich im Hinblick auf die Formgebung der Trennkannte. Aufgrund einer geringeren Spannung beim Cleaving-Schritt lassen sich komplexere Geometrien, beispielsweise kleinere Eckenradien herstellen.

Ferner kann die Kantenqualität verbessert werden: Chipping an der Kante respektive Mikrorisse werden vermieden bzw. sind weder visuell noch mikroskopisch wahrnehmbar. Dies wirkt sich insbesondere auch auf die Kantenfestigkeit positiv aus.

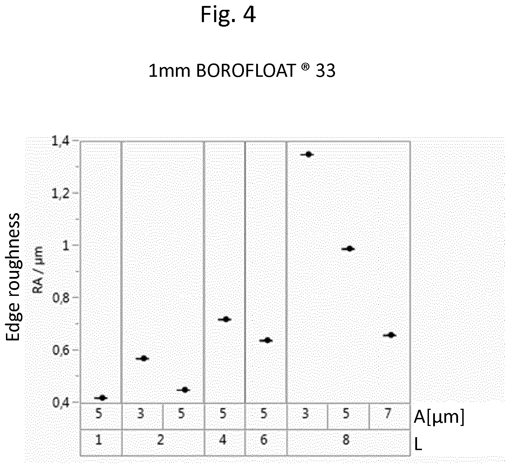

In Fig. 4 ist als Beispiel die Kantenrauheit für SCHOTT BOROFLOAT^{®} 33 mit 1mm Dicke für verschiedene Prozessparameter dargestellt. Die Anzahl der Laserpulse L ist in dieser Abbildung mit Burst bezeichnet. Ersichtlich ist, dass die Kantenrauheit bei gleicher Laserpuls-Anzahl mit steigendem Abstand der Schädigungen sinkt.

In den nachfolgenden Tabellen sind Eigenschaften der oben im Text genannten Schott-Gläser AF32^{®}, D263^{®} und BOROFLOAT^{®} 33 im Detail aufgelistet.

**Tabelle 1: Eigenschaften von SCHOTT AF32^{®}:**

| **Technische Daten:** | |
|---|---|
| Abmessungen: | round and square custom size wafer formats, e.g. 6", 8" or 12" |
| Surface roughness | < 1 nm RMS |
| Thicknesses | 0.03 mm up to 1.1 mm |
| Standard Thicknesses | 0,3 mm, 0,4 mm |
| Luminous transmittance τₙ₀₆₅ (d = 0.5 mm) | 91.9 % |
| Coefficient of mean linear thermal expansion α (20 °C; 300 °C) (static measurement) | 3.2 · 10⁻⁴ K⁻¹ |
| Transformation temperature Tg | 717 °C |
| Dielectric constant εᵣ at 1MHz | 5.1 |
| Refractive index n_{D} | 1.5099 |
| Density ρ (annealed at 40 °C/h) | 2.43 g/cm³ |

Der Elastizitätsmodul von SCHOTT AF32^{®} wird mit 74,8 kN/mm² abgeschätzt.

**Tabelle 2: Eigenschaften des SCHOTT-Glases D263^{®}:**

| **Technische Daten** | |
|---|---|
| Abmessungen | 440 mm x 360 mm, other size on request |
| Surface roughness | < 1 nm RMS |
| Thicknesses | 0.03 mm up to 1.1 mm |
| Standard Thicknesses and packaging units | 0.21 mm 100 pcs |
| | 0.30 mm 100 pcs |
| | 0.40 mm 50 pcs |
| | 0.55 mm 50pcs |
| Luminous transmittance τₙ₀₆₅ (d = 0.5 mm) | 91.7 % |
| Coefficient of mean linear thermal expansion α (20 °C; 300 °C) (static measurement) | 7.2 · 10⁻⁴ K⁻¹ |
| Transformation temperature Tg | 557 °C |
| Dielectric constant εᵣ at 1MHz | 6.7 |
| Refractive index n_{D} | 1.5230 |
| Density ρ (annealed at 40 °C/h) | 2.51 g/cm³ |

Der Elastizitätsmodul von SCHOTT D263^{®} wird mit 72,9 kN/mm² abgeschätzt.

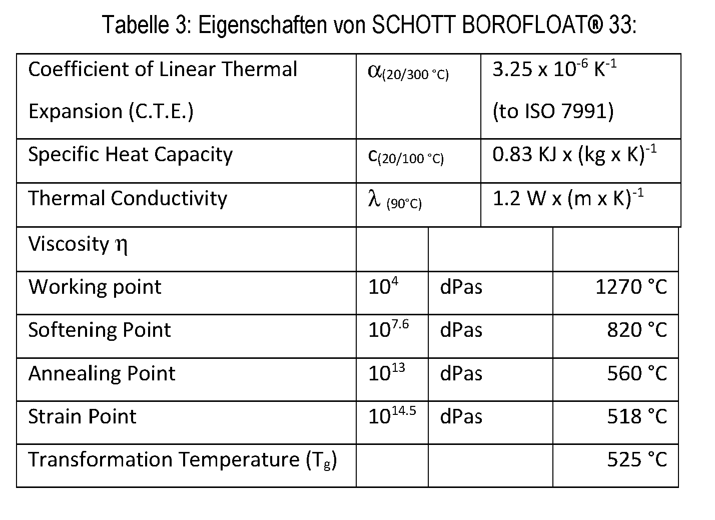

Der Elastizitätsmodul von SCHOTT BOROFLOAT^{®} 33 wird mit 64 kN/mm² abgeschätzt.

Das Problem, dass ein Riss beim Auftrennen nicht einer vorgesehenen Trennlinie folgt und ausreißt, oder dass der Riss nicht startet bzw. abbricht, stellt sich verschärft dann, wenn sich kreuzende Trennlinien vorgesehen sind. Beim Trennen von Substraten mit zueinander winklig angeordneten und aus Filamenten bestehenden Trennlinien durch thermisch induzierte Spannung kommt es an den Kreuzungspunkten der Trennlinien oft zu dem Problem, dass die Rissbildung in potentiell alle Richtungen läuft. Dienen die Trennlinien als Bruchvorbereitung im Rahmen eines mehrschrittigen Prozesses (z.B. mit den Zwischenschritten Waschen, Beschichten,...) zum späteren Trennen bzw. Vereinzeln in mehrere Teilstücke, so ist das vorberarbeitete Substrat oftmals an den Kreuzungspunkten der Trennlinien mit Anfangsrissen versehen. Dabei werden auch die Trennlinien, die erst später getrennt werden sollen (zum Beispiel nach weiteren Prozessschritten wie Waschen und Beschichten), mit einer Anfangsrissbildung versehen. Dadurch steigt das Risiko, dass die Trennlinie in den Weiterverarbeitungsprozessen unkontrolliert bricht.

Allgemein ist auch in diesem Fall die Erfindung aufgrund der genau eingestellten Bruchspannung besonders geeignet, ein Trennen entlang einer vorgesehenen Linie zu ermöglichen, auch wenn diese von einer weiteren Trennlinie mit voneinander beabstandet Schädigungen gekreuzt wird. Gemäß einer Weiterbildung der Erfindung ist daher vorgesehen, dass das erfindungsgemäß bearbeitete Werkstück mindestens zwei einander kreuzende Trennlinien mit zueinander beabstandeten Schädigungen aufweist, beziehungsweise, dass mindestens zwei einander kreuzende Trennlinien mit beabstandeten Schädigungen im Substrat erzeugt werden.

Bei sich kreuzenden Trennlinien ist es von Vorteil, das Werkstück mit unterschiedlichen Trennlinien zu versehen, welche mit unterschiedlichen hohen Spannungen getrennt werden können.

Allgemein, ohne Beschränkung auf spezielle Ausführungsbeispiele ist daher nach einem weiteren Aspekt der Erfindung ein Werkstück, insbesondere Glasprodukt, Glaskeramikprodukt und/oder Siliziumprodukt vorgesehen, das entlang mindestens zweier Trennlinien vorgeschädigt ist, welche sich kreuzen, so dass das Werkstück durch Ausüben einer Bruchspannung entlang der Trennlinien zerteilbar ist, wobei die Bruchspannungen zum Zerteilen an den Trenn- oder Modifikationslinien sich um mindestens 3 MPa, bevorzugt mindestens 5 MPa, besonders bevorzugt mindestens 10MPa unterscheiden.

Dabei ist es besonders günstig, wenn die Hauptstruktur der Trennlinien, welche als erstes getrennt werden sollen, eine deutlich niedrigere Spannung aufweisen als diejenigen Trennlinien, die erst später getrennt werden sollen.

Allgemein ist bevorzugt, dass das Werkstück wiederum entlang der Trennlinien voneinander beabstandete Schädigungen aufweist, wobei die Bruchspannung σ_{B} zum Trennen des Werkstücks entlang der Trennlinie kleiner ist als eine von dem jeweiligen Werkstück abhängige erste Referenzspannung σ_{R1} und dass die Kantenfestigkeit σ_{K} der nach dem Trennen erhaltenen Trennkante größer ist als eine von dem jeweiligen Werkstück abhängige zweite Referenzspannung σ_{R2}. Die Bruchspannung der anderen Trennlinie ist dann entsprechend mindestens 3 MPa höher oder auch niedriger. Besonders bevorzugt ist diese zweite Bruchspannung höher.

Die unterschiedlichen Bruchspannungen können bevorzugt durch Änderung der Laserparameter eingestellt werden, so dass alle hier beschriebenen Merkmale der mit dem Ultrakurzpulslaser herstellten Trennlinien auch für diese Ausführungsform mit sich kreuzenden Trennlinien gelten. Es ist aber auch denkbar, Schädigungen entlang der sich kreuzenden Trennlinien auf andere Weise herzustellen. Diese Ausführungsform der Erfindung ist also nicht notwendig auf das Einbringen filamentförmiger Schädigungen oder auf die Laserbearbeitung beschränkt.

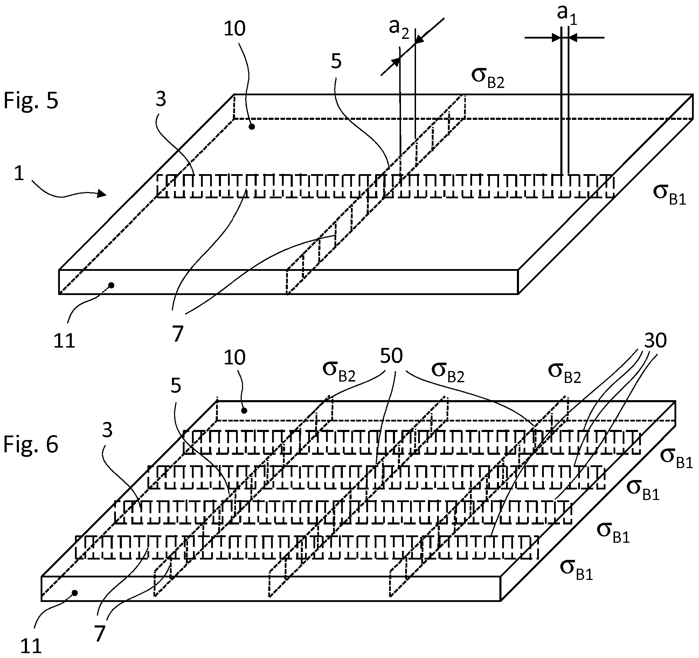

Fig. 5 zeigt ein Werkstück oder Substrat 1, welches wie oben beschrieben zwei Trennlinien 3, 5 aufweist. Vorzugsweise ist das Substrat 1 allgemein, ohne Beschränkung auf das dargestellte Beispiel, plattenförmig und weist dementsprechend zwei gegenüberliegende, im Allgemeinen parallel zueinander verlaufende Seitenflächen 10, 11 auf. Mit dem beschriebenen Verfahren wurden mittels eines Ultrakurzpulslasers filamentförmige Schädigungen 7 in das Substrat 1 eingefügt. Dabei wird das Laserlicht auf eine der Seitenflächen 10, 11 eingestrahlt, so dass sich die filamentförmigen Schädigungen 7 der Strahlrichtung folgend zwischen den beiden Seitenflächen 10, 11 erstrecken. Die Trennlinien 3, 5 kreuzen sich beim dargestellten Beispiel im rechten Winkel, wie dies auch bevorzugt ist, um rechteckige Teile abzutrennen.

Wie anhand von Fig. 5 zu erkennen ist, unterscheiden sich die Abstände a1, a2 der filamentförmigen Schädigungen 7 entlang der Trennlinien 3, 5. Im dargestellten Beispiel ist der Abstand a₁ der filamentförmigen Schädigungen entlang der Trennlinie 3 geringer als der Abstand a₂ der filamentförmigen Schädigungen entlang der Trennlinie 5. Damit ist auch die Bruchspannung σ_{B1} für ein Auftrennen an der Trennlinie 3 anders als die Bruchspannung σ_{B2} für das Auftrennen an der Trennlinie 5. Entsprechend der oben erläuterten Beobachtung kann die Bruchspannung für die Trennlinie 3 durch den geringeren Abstand a₁ höher oder auch niedriger sein. Typischerweise wird ein Minimum der Bruchspannung bei einem Abstand der Filamentlinien im Bereich von 5 bis 7 µm beobachtet. Allgemein, ohne Beschränkung auf das dargestellte Beispiel ist also ein Werkstück, beziehungsweise ein Substrat 1 vorgesehen, bei welchem sich die Abstände der filamentförmigen Schädigungen unterscheiden, wobei an einer der Trennlinien 3 die Abstände geringer sind, als an der anderen der einander kreuzenden Trennlinien.

In einer weiteren Ausführungsform ist das Werkstück oder Substrat 1 gekennzeichnet durch mindestens zwei unterschiedlichen Trennlinien wie in Fig. 5 dargestellt, wobei die Bruchspannung σ_{B1} zum Trennen des Werkstücks 1 entlang einer Trennlinie 3 kleiner ist als eine von dem jeweiligen Werkstück abhängige erste Referenzspannung σ_{R1} , wobei die Kantenfestigkeit σ_{K} der nach dem Trennen erhaltenen Trennkante größer ist als eine von dem jeweiligen Werkstück abhängige zweite Referenzspannung σ_{R2} und wobei die zweite Trennlinie 5 eine signifikant höhere Bruchspannung von mindesten σ_{B1} + 5MPa bevorzugt σ_{B1}+10 MPa bevorzugt σ_{B1}+15MPa aufweist. Bevorzugt ist die zweite Trennlinie sogar derart ausgeprägt, dass ihre zugehörige Bruchspannung über σ_{R1} liegt.

In einer weiteren Ausführungsform ist das Substrat mit einer Vielzahl von Trennlinien zur späteren Vereinzelung versehen, wobei Trennlinien gleicher Richtung auch mit gleichen Laserprozessparametern erzeugt werden und somit gleiche Bruchspannungen aufweisen und nur unterschiedliche Bruchspannungen zwischen Trennlinien unterschiedlicher Richtung vorliegen Mit anderen Worten sind mehr als zwei einander kreuzende Trennlinien vorgesehen, wobei sich die Menge der Trennlinien in mindestens zwei Gruppen nebeneinander verlaufender Trennlinien untergliedern lassen, wobei die mittlere Bruchkraft der Trennlinien einer Gruppe von der mittleren Bruchkraft einer anderen Gruppe um den oben genannten Wert von mindestens 3 MPa abweicht. Ein Beispiel eines solchen Werkstücks oder Substrats 1 zeigt Fig. 6. Mehrere Trennlinien 3 verlaufen parallel zueinander und damit nebeneinander entlang der Seitenfläche 10. Diese Trennlinien 3 werden von ebenfalls parallel zueinander verlaufenden Trennlinien 5 gekreuzt. Wie bei dem in Fig. 5 gezeigten Beispiel kreuzen sich die Trennlinien 3, 5 in rechtem Winkel. Die Menge der parallel verlaufenden Trennlinien 3 bildet eine erste Gruppe 30 von Trennlinien, die dazu senkrecht verlaufenden Trennlinien 5 bilden eine weitere Gruppe 50. Die Gruppen 30, 50 zeichnen sich dadurch aus, dass deren Trennlinien durch jeweils gleich beabstandete, zu einer Trennlinie der anderen Gruppe aber unterschiedlich beabstandete filamentförmige Schädigungen 7 aufweisen. Daher weisen auch die Bruchspannungen der Trennlinien 3 der Gruppe 30 einen Wert σ_{B1} auf, der sich vom Wert σ_{B2} der Trennlinien 5 der weiteren Gruppe 50 unterscheidet.

Prinzipiell bestehen mehrere Möglichkeiten die Bruchspannung entlang einer Trennlinie zu ändern, beziehungsweise einzustellen. Beispielsweise kann die Anzahl der Burst-Pulse, die zur Ausbildung des Filamentes verwendet werden, variiert werden (im Bereich 1-100 Pulse, bevorzugt im Bereich 2-20 Pulse). Auch kann die Pulsenergie des Einzel- oder Burstpulses im Bereich von 100 µJ bis 1mJ für Einzelpulse bzw. 400 µJ bis 4 mJ bei Burstpulsen variiert werden. Weiterhin kann, wie in den Figuren gezeigt der Abstand der Filamente 7 innerhalb der einzelnen Trennlinien 3, 5 auf verschiedene Werte im Bereich von 1 µm bis 25 µm, besonders bevorzugt im Bereich 2 µm bis 20 µm, variiert werden, so dass sich unterschiedliche Abstandswerte a₁ und a₂ ergeben.

So kann beispielsweise für ein 0,5 mm dickes Alkali-Boroalumnosilikatglas ein System von Trennlinien unterschiedlicher Bruchspannungen erzeugt werden indem durch Variation der Burst-Energie von 300 µJ auf 400 µJ die Brechkraft von 25 MPa auf ca. 15 MPa herabgesetzt wird (bei einem UKP-Laser mit Repititionsrate von 100 kHz und 10 ps-Pulsdauer). Weiterhin führt die Vergrößerung des Pitch-Abstandes um zu einer Abnahme der erforderlichen Bruchspannung für den Trennprozess um ca. 5 MPa: Bei einem pitch von 5 µm zwischen den eingebrachten Modifikationen ergibt sich bei einem wie oben beschriebenen Glas eine Bruchspannung von ca. 45 MPa während die Bruchspannung bei einem Abstand von 10 µm nur noch 15 MPa beträgt.

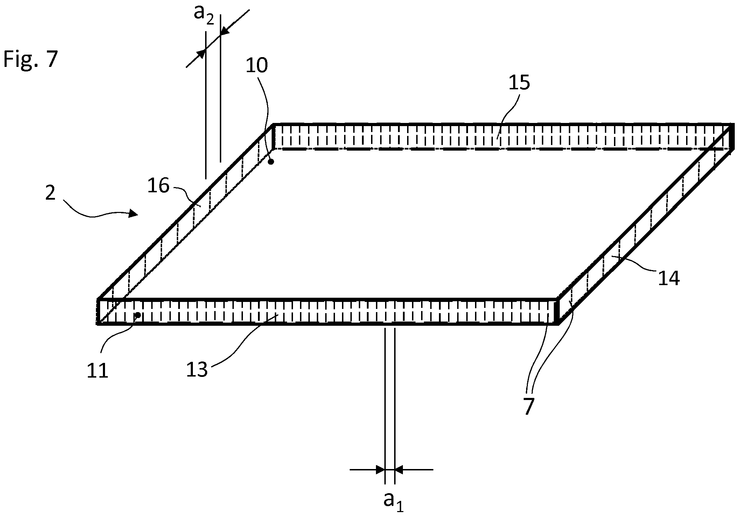

Das Substrat 1 kann nach Einbringen der Trennlinien durch einen zweischrittigen Vereinzelungsprozess zunächst durch Brechen entlang der ersten, anschließend durch Brechen entlang der zweiten Richtung vereinzelt werden. In diesem Fall weisen die benachbarte Kanten der Teilstücke unterschiedlich beabstandete periodische Strukturen (durch Öffnung des Filamentkanals in zwei Zylinderhälften) auf, die den gängigen topologischen Messverfahren wie taktiler oder optischer Profilometrie oder Elektronenmikroskopie zugänglich sind. Ein entsprechendes aus dem Werkstück 1 herausgeteiltes Element 2 ist in Fig. 7 dargestellt.

Wie anhand der schematischen Darstellung ersichtlich wird ein scheibenförmiges Glas- oder Glaskeramik-Element 2 bereitgestellt, welches zwei gegenüberliegende Seitenflächen 10, 11, sowie Kantenflächen 13, 14, 15, 16 aufweist, wobei mindestens zwei der Kantenflächen 13, 14, 15, 16 filamentförmige Schädigungen 7 aufweisen, welche in periodischem Abstand nebeneinander in Richtung von einer der Seitenflächen 10, 11 zur anderen der Seitenflächen auf der Kantenfläche verlaufen, wobei sich die Periode des Abstands der filamentförmigen Schädigungen an zumindest zwei der Kantenflächen 13, 14, 15, 16 voneinander unterscheidet.

Bevorzugt ist wie auch im dargestellten Beispiel eine allgemein viereckige Form, so dass das Element 2 zwei Paare gegenüberliegender Kantenflächen 13, 15 und 14, 16 aufweist. Dabei ist die Periode der filamentförmigen Schädigungen 7 bei einem Paar gegenüberliegender Kanten vorzugsweise jeweils gleich. Bezüglich der Perioden, beziehungsweise Abstände der filamentförmigen Schädigungen, der Dicke des Elements 2 und dessen Material gelten alle hier bezüglich des erfindungsgemäßen Verfahrens und des damit herstellbaren Werkstücks offenbarten Angaben entsprechend.

Ohne Beschränkung der Allgemeinheit kann das Trennen sowohl durch einen mechanischen Brechprozess oder einer laserbasierten thermischen Trennprozess (mittels CO₂-Laser) oder andere Verfahren durchgeführt werden.

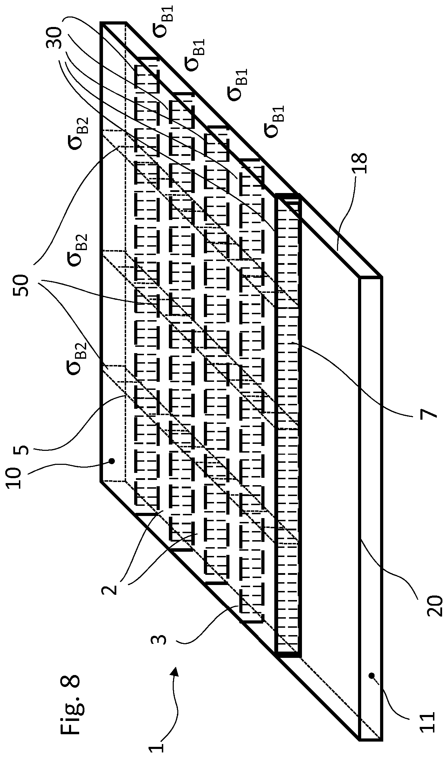

In einer weiteren Ausführungsform bleiben die einzelnen Streifen (gebildet durch gegenüberliegende Kanten gleicher Bruchspannung) über einen gemeinsamen Steg miteinander verbunden, der als Handlingshilfe für nachfolgende Prozesschritte wie Waschen, Beschichten und das spätere Vereinzeln verwendet werden kann. Ein Ausführungsbeispiel für ein solches Werkstück 1 zeigt Fig. 8. Wie anhand der beispielhaften Figur ersichtlich enden die Trennlinien 5 einer der Gruppen 50 vor einer der Kanten des Werkstücks 1, so dass ein Steg 18 zwischen den Enden der Trennlinien 5 und der Kante 20 des Werkstücks gebildet wird, an welchem abtrennbare Elemente 2 befestigt bleiben, auch wenn das Werkstück 1 an den vor der Kante 20 endenden Trennlinien 5 aufgetrennt wird.

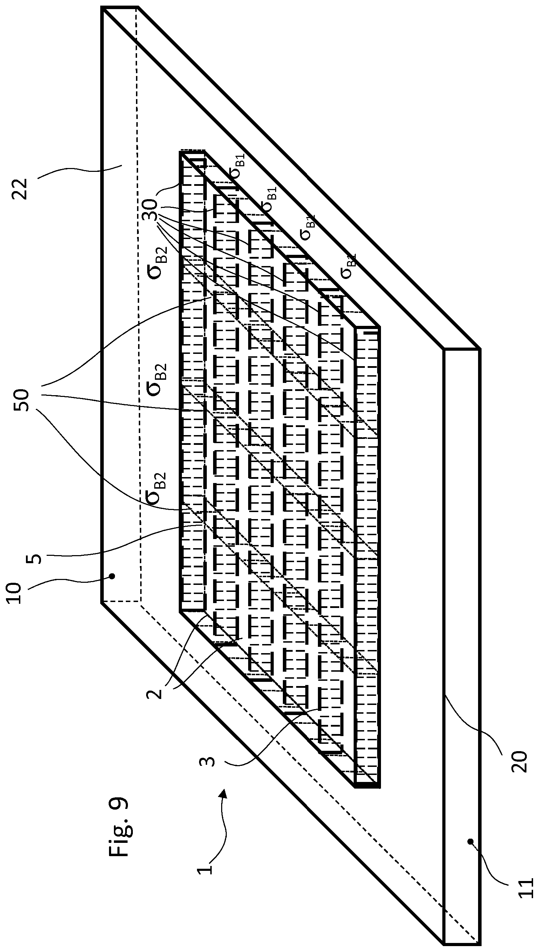

In einer weiteren Ausführungsform besitzt das zum Trennen vorbereitete Werkstück 1 einen umlaufenden Rahmen, aus dem beim Vereinzeln ganze Streifen oder einzelne Stücke heraus gebrochen werden können. Diese Ausführungsform mit einem Rahmen 22 zeigt Fig. 9 Hierbei kann beim Vereinzelungsprozess der Handlingsrahmen als Ganzes erhalten bleiben oder auch schrittweise zerlegt werden. Wie auch beim Steg 18 der Ausführungsform gemäß Fig. 8 enden die Trennlinien einer der Gruppen vor der Kante 20 des Werkstücks 1. Im Falle eines Rahmens 22 gilt dies dann für beide Gruppen 30, 50.

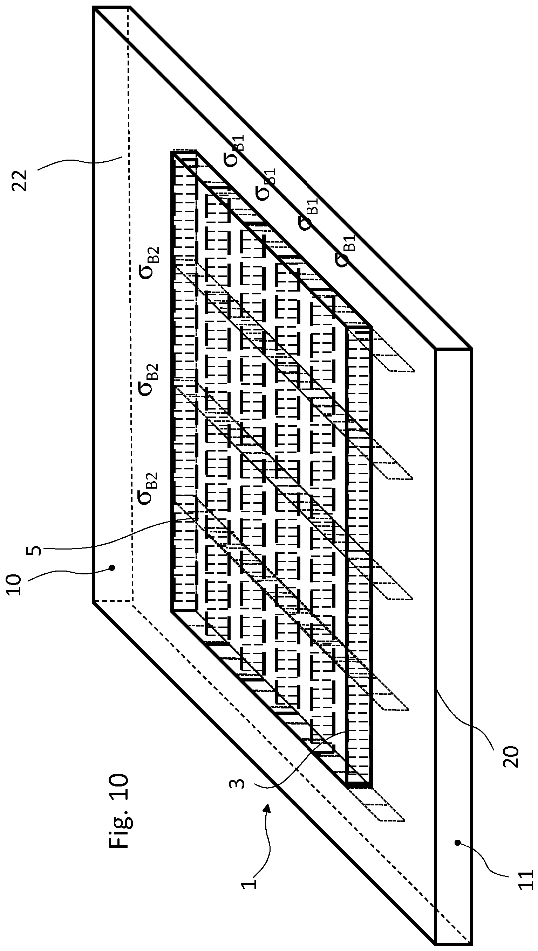

Weitere Varianten, bei denen die filamentierten Trennlinien beispielsweise teilweise in den Handlingsrahmen oder Handlingsstreifen hineinragen sind ebenso denkbar. Ein Beispiel hierzu zeigt Fig. 10. Bei diesem Beispiel wird eine Seite des Rahmens 22 durch den Abstand der Enden der Trennlinien 5 zur Kante 20 bestimmt, während die anderen Seiten des Rahmens durch die Längsseiten der Trennlinien 3, 5 begrenzt werden.

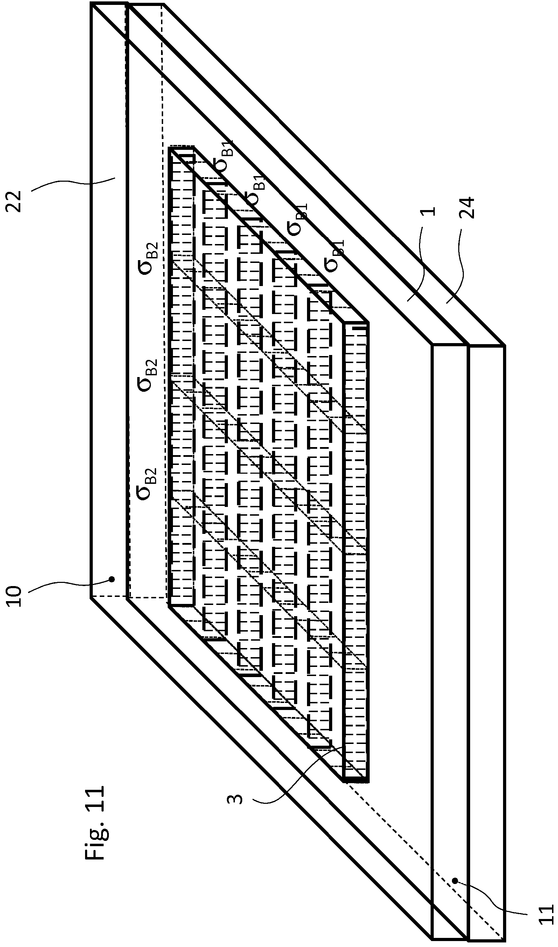

Fig. 11 zeigt ein Beispiel, um ein erfindungsgemäßes Werkstück 1 beispielsweise für eine industrielle Weiterverarbeitung handhaben zu können, und dabei eine vorzeitige Auftrennung an den Trennlinien 3, 5 zu vermeiden. Bei diesem Beispiel wird das Werkstück 1 mit einer seiner Seitenflächen 11 auf einem Träger 24 befestigt. Der Träger 24 kann beispielsweise ein Glas- oder Siliziumwafer oder ein Polymer, beziehungsweise eine Kunststoffplatte sein.

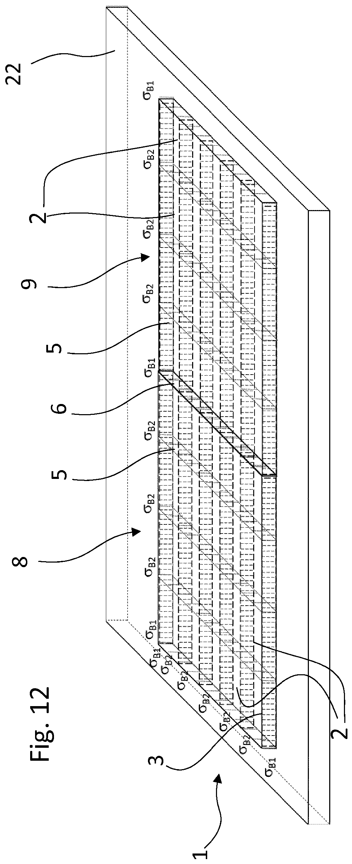

Bei den Ausführungsform der Fig. 6 sind die Abstände der filamentförmigen Schädigungen 7 und die Bruchspannungen gruppenweise verschieden, wobei die Gruppen durch nebeneinander verlaufende und sich nicht kreuzende Trennlinien gebildet werden. Dies schließt nicht aus, eine oder mehrere der nebeneinander verlaufenden Trennlinien mit einer anderen, insbesondere niedrigeren Bruchspannung zu versehen. So wird gemäß einer weiteren Ausführungsform das Substrat oder Werkstück 1 durch geeignete Wahl der Bruchspannungen in mehrere größere Teilstücke, die selbst wieder zerlegt werden können, unterteilt. Diese Unterteilung muss keine tatsächliche Auftrennung sein, sondern ist insbesondere als Untergliederung des Werkstücks an den Trennlinien zwischen den Teilstücken zu verstehen. Bei dem in Fig. 12 gezeigten Beispiel ist das Werkstück 1 in zwei Teilstücke 8, 9 an einer Trennlinie 6 untergliedert.

Beispielsweise hat nur jede n-te parallele Trennlinie gleiche Bruchspannung und die Trennlinien dazwischen einen anderen Bruchspannungswert. Es sind in diesem Fall beliebige Kombinationen paralleler und dazu senkrechter Trennungslinien möglich. Die Variation der Bruchspannungen ist jeweils - wie oben erwähnt - durch Änderung von Pulsenergie, Burstzahl oder Abstand der eingebrachten Modifikationen möglich. Denkbar wäre eine Unterteilung, bei welcher die Trennlinie an der Grenze zwischen den Teilstücken eine höhere Bruchspannung als benachbarte Trennlinien aufweist. Um eine Auftrennung zuerst in die Teilstücke 8, 9 und dann weiter in einzelne Elemente 2 zu ermöglichen, ist es aber besonderes bevorzugt, für die Trennlinie(n) 6 eine niedrigere Bruchspannung einzustellen, als für die benachbarten Trennlinien innerhalb der Teilstücke 8, 9. Gemäß dieser Ausführungsform der Erfindung ist also vorgesehen, dass das Werkstück 1 mehrere nebeneinander laufende Trennlinien 5, 6 aufweist, wobei mindestens eine der Trennlinien 6 zwischen zwei benachbarten Trennlinien 5 verläuft, und wobei die zwischen den beiden benachbarten Trennlinien 5 verlaufende Trennlinie eine niedrigere Bruchspannung aufweist, als die benachbarten Trennlinien 5. Vorzugsweise verlaufen wie im gezeigten Beispiel beiderseits der Trennlinie 6 mit der niedrigeren Bruchspannung zwei Gruppen von Trennlinien 5 mit höherer Bruchspannung. Der Unterschied der Bruchspannungen kann allgemein ebenso gewählt werden wie bei den Ausführungsformen mit sich kreuzenden Trennlinien, also vorzugsweise mindestens 3 MPa, insbesondere mindestens 5 MPa.

Alle hier beschriebenen Werkstücke können prinzipiell auch beschichtete Substrate sein. Dabei kann die Beschichtung gegebenenfalls auch vor dem lasergestützten Einfügen der Trennlinien aufgebracht werden. Als Beschichtung kann gemäß einer Ausführungsform der Erfindung eine organische funktionelle Beschichtung für Protein- oder DNA-Analysen aufgetragen sein. Damit kann das Werkstück 1 oder ein aus dem Werkstück 1 herausteilbares Element 2 als DNA- oder Protein-Microarray verwendet werden. Geeignete Beschichtungen hierfür sind Aminosilane, Epoxysilane, Aldehydsilane, Hydrogele, Streptavidin, sowie bestimmte Polymere. Die Beschichtung kann dann mit einem Microarray aus Oligonukleotiden, cDNA/PCR, BAC (Bacterial Artificial Chromosomes), Peptiden, Proteinen, Antikörpern, Glycanen oder Zell- oder Gewebeproben versehen werden. Die Proben können auf diese Weise gemeinsam präpariert und dann nach dem Aufteilen getrennt untersucht und/oder versandt werden.

### Bezugszeichenliste:

- 1: Werkstück
- 2: Element
- 3, 5, 6: Trennlinie
- 7: Filamentförmige Schädigung
- 8, 9: Teilstücke von 1
- 10, 11: Seitenflächen von 1
- 30, 50: Gruppen von Trennlinien
- 13, 14, 15, 16: Kantenfläche
- 18: Steg
- 20: Kante von 1
- 22: Rahmen
- 24: Träger

## Patentansprüche

1. Verfahren zum Trennen eines Substrats (1) aus Glas, Glaskeramik und/oder Silizium,
wobei entlang einer vorbestimmten Trennlinie mit wenigstens einem gepulsten Laserstrahl voneinander beabstandet Schädigungen in das Substrat eingebracht werden, wobei das Material des Substrats für die Laserpulse transparent ist,
wobei sowohl der mittlere Abstand zwischen benachbarten Schädigungen als auch die Anzahl der Laserpulse zur Erzeugung jeweils einer Schädigung derart gewählt werden,
dass a) die Bruchspannung σ_{B} zum Trennen des Substrats (1) entlang der Trennlinie kleiner ist als eine von dem jeweiligen Substrat abhängige erste Referenzspannung σ_{R1},
dass b) die Kantenfestigkeit σ_{K} der nach dem Trennen erhaltenen Trennkante größer ist als eine von dem jeweiligen Substrat abhängige zweite Referenzspannung σ_{R2} und
dass c) das Substrat nach dem Einbringen der Schädigungen durch Einwirkung einer Spannung entlang der Trennlinie trennbar ist, und
wobei die erste und die zweite Referenzspannung σ_{R1} = σ_{R2} identisch sind und vorgegeben sind als eine vom Material des Substrats abhängige maximale thermische Spannung σₜₕ oder bei einem chemisch oder thermisch vorgespannten Substrat als eine durch die Eigenschaften des vorgespannten Substrats definierte innere Zugspannung σ_{CT}, wobei im ersten Fall die maximale thermische Spannung σₜₕ nach der Formel σₜₕ = 0,5·α·E·(T_{g}-100°C) bestimmbar ist, wobei α den thermischen Ausdehnungskoeffizienten des Materials des Substrats bezeichnet, E den Elastizitätsmodul des Materials des Substrats bezeichnet und T_{g} die Glasübergangstemperatur des Materials des Substrats bezeichnet und wobei im zweiten Fall bei einem chemisch vorgespannten Substrat die innere Zugspannung σ_{CT} nach der Formel σ_{CT} = (σ_{CS}·d_{L})/(d-2d_{L}) oder bei einem thermisch vorgespannten Substrat nach der Formel σ_{CT} = σ_{CS}/2 bestimmbar ist, wobei σ_{CS} die Oberflächendruckspannung des vorgespannten Substrats, d_{L} die Eindringtiefe der Vorspannung und d die Dicke des Substrats bezeichnet, oder
wobei für die erste Referenzspannung σ_{R1} ≤ C_{R1}· α ·E·(T_{g}-100°C) gilt und für die zweite Referenzspannung σ_{R2} ≥ C_{R2}·α·E·(T_{g}-100°C) gilt, wobei C_{R1} und C_{R2} Referenzspannungskoeffizienten mit C_{R1}=0,5/k und C_{R2}=0,5·k und k=1,5, vorzugsweise k=2, besonders bevorzugt k=2,5 sind und wobei α den thermischen Ausdehnungskoeffizienten des Materials des Substrats bezeichnet, E den Elastizitätsmodul des Materials des Substrats bezeichnet und T_{g} die Glasübergangstemperatur des Materials des Substrats bezeichnet.

2. Verfahren nach einem der vorstehenden Ansprüche, wobei nach dem Einbringen der Schädigungen ein Auftreffpunkt einer Laserstrahlung, vorzugsweise eines CO₂-Lasers, auf dem Substrat entlang der Trennlinie bewegt wird, um die zur Trennung entlang der Trennlinie einzuwirkende Spannung hervorzurufen.

3. Verfahren nach einem der vorstehenden Ansprüche, wobei der mittlere Abstand zwischen benachbarten Schädigungen gewählt wird aus dem Intervall [1 µm, 10 µm], vorzugsweise gewählt wird aus dem Intervall [3 µm, 8 µm], besonders bevorzugt gewählt wird aus dem Intervall [5 µm, 7 µm] und/oder wobei die Anzahl der Laserpulse zur Erzeugung jeweils einer Schädigung gewählt wird aus dem Intervall [1, 20], vorzugsweise gewählt wird aus dem Intervall [1, 10], besonders bevorzugt gewählt wird aus dem Intervall [2, 8].

4. Werkstück aus Glas, Glaskeramik und/oder Silizium das entlang einer Trennlinie vorgeschädigt ist, **dadurch gekennzeichnet,**
**dass** das Werkstück entlang der Trennlinie voneinander beabstandete Schädigungen aufweist und
**dass** die Bruchspannung σ_{B} zum Trennen des Werkstücks entlang der Trennlinie kleiner ist als eine von dem jeweiligen Werkstück abhängige erste Referenzspannung σ_{R1} und
**dass** die Kantenfestigkeit σ_{K} der nach dem Trennen erhaltenen Trennkante größer ist als eine von dem jeweiligen Werkstück abhängige zweite Referenzspannung σ_{R2},
wobei sowohl die erste als auch die zweite Referenzspannung σ_{R1} = σ_{R2} vorgegeben sind als eine vom Material des Werkstücks abhängige maximale thermische Spannung σₜₕ oder bei einem chemisch oder thermisch vorgespannten Substrat als eine durch die Eigenschaften des vorgespannten Werkstücks definierte innere Zugspannung σ_{CT}, wobei im ersten Fall die maximale thermische Spannung σₜₕ nach der Formel σₜₕ = 0,5·α·E·(T_{g}-100°C) bestimmbar ist, wobei α den thermischen Ausdehnungskoeffizienten des Materials des Werkstücks bezeichnet, E den Elastizitätsmodul des Materials des Werkstücks bezeichnet und T_{g} die Glasübergangstemperatur des Materials des Werkstücks bezeichnet und wobei im zweiten Fall bei einem chemisch vorgespannten Substrat die innere Zugspannung σ_{CT} nach der Formel σ_{CT} = (σ_{CS}·d_{L})/(d-2d_{L}) oder bei einem thermisch vorgespannten Substrat nach der Formel σ_{CT} = σ_{CS}/2 bestimmbar ist, wobei σ_{CS} die Oberflächendruckspannung des vorgespannten Werkstücks, d_{L} die Eindringtiefe der Vorspannung und d die Dicke des Werkstücks bezeichnet, oder
wobei für die erste Referenzspannung σ_{R1} ≤ C_{R1}·α·E·(T_{g}-100°C) gilt und für die zweite Referenzspannung σ_{R2} ≥ C_{R2}· α ·E·(T_{g}-100°C) gilt, wobei C_{R1} und C_{R2} Referenzspannungskoeffizienten mit C_{R1}=0,5/k und C_{R2}=0,5*k und k=1,5, vorzugsweise k=2, besonders bevorzugt k=2,5 sind und wobei α den thermischen Ausdehnungskoeffizienten des Materials des Werkstücks bezeichnet, E den Elastizitätsmodul des Materials des Werkstücks bezeichnet und T_{g} die Glasübergangstemperatur des Materials des Werkstücks bezeichnet.

5. Werkstück nach Anspruch 4, **dadurch gekennzeichnet, dass** das Werkstück mindestens zwei einander kreuzende Trennlinien (3, 5) mit zueinander beabstandeten Schädigungen (7) aufweist.

6. Werkstück nach dem vorstehenden Anspruch, wobei die Bruchspannungen zum Zerteilen an den Trennlinien sich um mindestens 3 MPa, bevorzugt mindestens 5 MPa, besonders bevorzugt mindestens 10 MPa unterscheiden.

7. Werkstück gemäß einem der zwei vorstehenden Ansprüche, bei welchem sich die Abstände der filamentförmigen Schädigungen (7) unterscheiden, wobei an einer der Trennlinien (3) die Abstände geringer sind, als an der anderen der einander kreuzenden Trennlinien (3, 5).

8. Werkstück gemäß einem der drei vorstehenden Ansprüche, mit mehr als zwei einander kreuzenden Trennlinien, wobei sich die Menge der Trennlinien in mindestens zwei Gruppen (30, 50) nebeneinander verlaufender Trennlinien (3, 5) untergliedern lässt, wobei die mittlere Bruchkraft der Trennlinien einer Gruppe von der mittleren Bruchkraft einer anderen Gruppe um mindestens 3 MPa abweicht.

9. Werkstück gemäß dem vorstehenden Anspruch, **dadurch gekennzeichnet, dass** die Trennlinien (5) einer der Gruppen (50) vor einer der Kanten des Werkstücks (1) enden, so dass ein Steg (18) oder Rahmen (22) zwischen den Enden der Trennlinien (5) und der Kante (20) des Werkstücks (1) gebildet wird, an welchem abtrennbare Elemente (2) befestigt bleiben, auch wenn das Werkstück (1) an den vor der Kante (20) endenden Trennlinien (5) aufgetrennt wird.

10. Werkstück (1) gemäß einem der Ansprüche 4 bis 9, ausgebildet als beschichtetes Substrat, vorzugweise beschichtet mit einer organischen funktionellen Beschichtung für Protein- oder DNA-Analysen.

## Claims

1. A method for separating a substrate (1) made of glass, glass ceramic and/or silicon,
wherein defects are introduced at a distance from one another into the substrate along a predetermined separation line using at least one pulsed laser beam, the material of the substrate being transparent to the laser pulses;
wherein both the average spacing between adjacent defects and the number of laser pulses for producing a respective defect are selected such
that a) the breaking stress σ_{B} for separating the substrate (1) along the separation line is smaller than a first reference stress σ_{R1} which depends on the respective substrate;
that b) the edge strength σk of the separation edge obtained after separation is greater than a second reference stress σ_{R2} which depends on the respective substrate; and
that c) the substrate can be separated after the defects have been introduced by applying a stress along the separation line; and
wherein the first and the second reference stresses are identical, σ_{R1} = σ_{R2} and are specified as a maximum thermal stress σₜₕ which depends on the material of the substrate; or in the case of a chemically or thermally toughened substrate as an internal tensile stress σ_{CT} defined by the properties of the toughened substrate; wherein in the first case, the maximum thermal stress σₜₕ can be determined according to the formula σₜₕ = 0.5·α·E·(T_{g} - 100 °C), wherein α denotes the coefficient of thermal expansion of the material of the substrate, E denotes the Young's modulus of the material of the substrate, and T_{g} denotes the glass transition temperature of the material of the substrate; and wherein in the second case the internal tensile stress σ_{CT} can be determined for a chemically toughened substrate according to the formula σ_{CT} = (σ_{CS}·d_{L})/(d - 2d_{L}), or for a thermally toughened substrate according to the formula σ_{CT} = σ_{CS}/2, wherein σ_{CS} is the surface compressive stress of the toughened substrate, d_{L} is the penetration depth of the preliminary stress, and d is the thickness of the substrate; or
wherein σ_{R1} ≤ C_{R1}·α·E·(T_{g} - 100 °C) applies for the first reference stress, and σ_{R2} ≥ C_{R2}·α·E·(T_{g} - 100 °C) applies for the second reference stress, wherein C_{R1} and C_{R2} are reference stress coefficients with C_{R1} = 0.5/k and C_{R2} = 0.5·k and k = 1.5, preferably k = 2, most preferably k = 2.5, and wherein α denotes the coefficient of thermal expansion of the material of the substrate, E denotes the Young's modulus of the material of the substrate, and T_{g} denotes the glass transition temperature of the material of the substrate.

2. The method according to the preceding claim, wherein once the defects have been introduced, a point of incidence of a laser radiation, preferably from a CO₂ laser, is moved over the substrate along the separation line in order to induce the stress to be applied for the separation along the separation line.

3. The method according to any one of the preceding claims, wherein the average spacing between adjacent defects is selected from the interval of [1 µm, 10 µm], preferably selected from the interval of [3 µm, 8 µm], most preferably selected from the interval of [5 µm, 7 µm]; and/or wherein the number of laser pulses for generating a respective defect is selected from the interval of [1, 20], preferably selected from the interval of [1, 10], most preferably selected from the interval of [2, 8].

4. A workpiece made of glass, glass ceramic and/or silicon, which is pre-damaged along a separation line, **characterized in**
**that** the workpiece includes defects that are spaced apart from one another along the separation line; and
**that** the breaking stress σ_{B} for separating the workpiece along the separation line is smaller than a first reference stress σ_{R1} which depends on the respective workpiece; and
**that** the edge strength σ_{K} of the separation edge obtained after separation is greater than a second reference stress σ_{R2} which depends on the respective workpiece;
wherein both the first and second reference stresses, σ_{R1} = σ_{R2}, are specified as a maximum thermal stress σₜₕ which depends on the material of the workpiece; or in the case of a chemically or thermally toughened substrate as an internal tensile stress σ_{CT} defined by the properties of the toughened workpiece; wherein in the first case the maximum thermal stress σₜₕ can be determined according to the formula σₜₕ = 0.5·α·E·(T_{g} - 100°C), wherein α denotes the coefficient of thermal expansion of the material of the workpiece, E denotes the Young's modulus of the material of the workpiece, and T_{g} denotes the glass transition temperature of the material of the workpiece; and wherein in the second case the internal tensile stress σ_{CT} can be determined for a chemically toughened substrate according to the formula σ_{CT} = (σ_{CS}·d_{L})/(d - 2d_{L}), or for a thermally toughened substrate according to the formula σ_{CT} = σ_{CS}/2, wherein σ_{CS} is the surface compressive stress of the toughened workpiece, d_{L} is the penetration depth of the preliminary stress, and d is the thickness of the workpiece; or
wherein σ_{R1} ≤ C_{R1}·α·E·(T_{g} - 100 °C) applies for the first reference stress, and σ_{R2} ≥ C_{R2}·α·E·(T_{g} - 100 °C) applies for the second reference stress, wherein C_{R1} and C_{R2} are reference stress coefficients with C_{R1} = 0.5/k and C_{R2} = 0.5·k and k = 1.5, preferably k = 2, most preferably k = 2.5, and wherein α denotes the coefficient of thermal expansion of the material of the workpiece, E denotes the Young's modulus of the material of the workpiece, and T_{g} denotes the glass transition temperature of the material of the workpiece.

5. The workpiece according to claim 4, **characterized in that** the workpiece has at least two intersecting separation lines (3, 5) comprising defects (7) that are spaced apart from one another.

6. The workpiece according to the preceding claim, wherein the breaking stresses for separating along the separation lines differ by at least 3 MPa, preferably by at least 5 MPa, most preferably by at least 10 MPa.

7. The workpiece according to any one of the two preceding claims, wherein the spacings between the filament-shaped defects (7) differ, wherein one of the separation lines (3) features spacings that are smaller than that of the other of the intersecting separation lines (3, 5).

8. The workpiece according to any one of the three preceding claims, which includes more than two intersecting separation lines, wherein the plurality of separation lines can be subdivided into at least two sets (30, 50) of separation lines (3, 5) running next to one another, wherein the average breaking force for the separation lines of one set differs from the average breaking force for another set by at least 3 MPa.

9. The workpiece according to the preceding claim, **characterized in that** the separation lines (5) of one of the sets terminate before one of the edges of the workpiece (1), so that a web (18) or frame (22) is defined between the ends of the separation lines (5) and the edge (20) of the workpiece (1), where separable elements (2) remain attached even when the workpiece (1) is severed along the separation lines (5) that terminate before the edge (20).

10. The workpiece (1) according to any one of claims 4 to 9, provided in the form of a coated substrate, preferably coated with an organic functional coating for protein or DNA analyses.

## Revendications

1. Procédé pour séparer un substrat (1) en verre, vitrocéramique et/ou silicium,
selon lequel des endommagements sont réalisés dans le substrat à distance les uns des autres à l'aide d'au moins un faisceau laser pulsé, le long d'une ligne de séparation prédéfinie, le matériau du substrat étant transparent aux impulsions laser,
selon lequel aussi bien la distance moyenne entre des endommagements voisins que le nombre d'impulsions laser pour réaliser respectivement un endommagement sont choisis tels
que a) la contrainte à la rupture σ_{B} pour séparer le substrat (1) le long de la ligne de séparation soit inférieure à une première contrainte de référence σ_{R1} qui est fonction du substrat respectif,
que b) la résistance de bord σ_{K} du bord de séparation obtenu après la séparation soit supérieure à une deuxième contrainte de référence σ_{R2} qui est fonction du substrat respectif, et
que c) après la réalisation des endommagements, le substrat puisse être séparé par l'action d'une contrainte le long de la ligne de séparation, et
selon lequel la première et la deuxième contrainte de référence σ_{R1} = σ_{R2} sont identiques et prédéfinies en tant que contrainte thermique maximale σₜₕ qui est fonction du matériau du substrat, ou, pour un substrat à précontrainte chimique ou thermique, en tant que contrainte de traction interne σ_{CT} définie par les propriétés du substrat précontraint, sachant que dans le premier cas, la contrainte thermique maximale σₜₕ peut être déterminée selon la formule σₜₕ = 0,5·α·E·(T_{g}-100 °C), où α désigne le coefficient de dilatation thermique du matériau du substrat, E désigne le module d'élasticité du matériau du substrat et T_{g} la température de transition vitreuse du matériau du substrat, et sachant que dans le deuxième cas, pour un substrat à précontrainte chimique, la contrainte de traction interne σ_{CT} peut être déterminée selon la formule σ_{CT} = (σ_{CS}·d_{L})/(d-2d_{L}) ou, pour un substrat à précontrainte thermique, selon la formule σ_{CT} = σ_{CS}/2, où σ_{CS} désigne la contrainte de compression superficielle du substrat précontraint, d_{L} la profondeur de pénétration de la précontrainte, et d l'épaisseur du substrat, ou
selon lequel, pour la première contrainte de référence σ_{R1} ≤ C_{R1}·α·E·(T_{g}-100 °C) et pour la deuxième contrainte de référence σ_{R2} ≥ C_{R2}·α·E·(T_{g}-100 °C), sachant que C_{R1} et C_{R2} sont des coefficients de contrainte de référence avec C_{R1} = 0,5/k et C_{R2} = 0,5·k et k = 1,5, de préférence k = 2, et de manière particulièrement avantageuse k = 2,5, et que α désigne le coefficient de dilatation thermique du matériau du substrat, E désigne le module d'élasticité du matériau du substrat, et T_{g} la température de transition vitreuse du matériau du substrat.

2. Procédé selon une des revendications précédentes, selon lequel, après la réalisation des endommagements, un point d'impact d'un rayonnement laser, de préférence d'un laser CO₂, est déplacé sur le substrat, le long de la ligne de séparation, aux fins de générer la contrainte agissant le long de la ligne de séparation en vue de la séparation.

3. Procédé selon une des revendications précédentes, selon lequel la distance moyenne entre des endommagements voisins est choisie dans l'intervalle [1 µm, 10 µm], est de préférence choisie dans l'intervalle [3 µm, 8 µm], de manière particulièrement avantageuse dans l'intervalle [5 µm, 7 µm], et/ou selon lequel le nombre d'impulsions laser pour la réalisation respectivement d'un endommagement est choisi dans l'intervalle [1, 20], est de préférence choisi dans l'intervalle [1, 10], de manière particulièrement avantageuse dans l'intervalle [2, 8].

4. Pièce en verre, vitrocéramique et/ou silicium qui est soumise à un endommagement préalable le long d'une ligne de séparation, **caractérisée**
**en ce que** la pièce présente des endommagements espacés les uns des autres le long de la ligne de séparation, et
**en ce que** la contrainte à la rupture σ_{B} pour séparer la pièce le long de la ligne de séparation est inférieure à une première contrainte de référence σ_{R1} qui est fonction de la pièce respective, et
**en ce que** la résistance de bord σ_{K} du bord de séparation obtenu après la séparation est supérieure à une deuxième contrainte de référence σ_{R2} qui est fonction de la pièce respective,
dans laquelle aussi bien la première que la deuxième contrainte de référence σ_{R1} = σ_{R2} sont prédéfinies en tant que contrainte thermique maximale σₜₕ qui est fonction du matériau de la pièce, ou, pour un substrat à précontrainte chimique ou thermique, en tant que contrainte de traction interne σ_{CT} définie par les propriétés de la pièce précontrainte, sachant que dans le premier cas, la contrainte thermique maximale σₜₕ peut être déterminée selon la formule σₜₕ = 0,5·α·E·(T_{g}-100 °C), où α désigne le coefficient de dilatation thermique du matériau de la pièce, E désigne le module d'élasticité du matériau de la pièce et T_{g} la température de transition vitreuse du matériau de la pièce, et sachant que dans le deuxième cas, pour un substrat à précontrainte chimique, la contrainte de traction interne σ_{CT} peut être déterminée selon la formule σ_{CT} = (σ_{CS}·d_{L})/(d-2d_{L}) ou, pour un substrat à précontrainte thermique, selon la formule σ_{CT} = σ_{CS}/2, où σ_{CS} désigne la contrainte de compression superficielle de la pièce précontrainte, d_{L} la profondeur de pénétration de la précontrainte, et d l'épaisseur de la pièce, ou
dans laquelle, pour la première contrainte de référence σ_{R1} ≤ C_{R1}·α·E·(T_{g}-100 °C) et pour la deuxième contrainte de référence σ_{R2} ≥ C_{R2}·α·E·(T_{g}-100 °C), sachant que C_{R1} et C_{R2} sont des coefficients de contrainte de référence avec C_{R1} = 0,5/k et C_{R2} = 0,5*k et k = 1,5, de préférence k = 2, et de manière particulièrement avantageuse k = 2,5, et que α désigne le coefficient de dilatation thermique du matériau du substrat, E désigne le module d'élasticité du matériau du substrat, et T_{g} la température de transition vitreuse du matériau du substrat.

5. Pièce selon la revendication 4, **caractérisée en ce que** la pièce présente au moins deux lignes de séparation (3, 5) qui se croisent et comportent des endommagements espacés les uns des autres.

6. Pièce selon la revendication précédente, dans laquelle les contraintes à la rupture pour la division au niveau des lignes de séparation se distinguent d'au moins 3 MPa, de préférence d'au moins 5 MPa, et de manière particulièrement avantageuse d'au moins 10 MPa.

7. Pièce selon une des deux revendications précédentes, dans laquelle les distances des endommagements (7) en forme de filaments sont différentes, les distances à l'emplacement de l'une des lignes de séparation (3) étant inférieures à celles de l'autre ligne des lignes de séparation (3, 5) qui se croisent.

8. Pièce selon une des trois revendications précédentes, comprenant plus de deux lignes de séparation qui se croisent, la quantité des lignes de séparation pouvant être divisée en au moins deux groupes (30, 50) de lignes de séparation (3, 5) qui s'étendent les unes à côté des autres, la contrainte de rupture moyenne des lignes de séparation d'un groupe étant différente d'au moins 3 MPa de la contrainte de rupture moyenne d'un autre groupe.

9. Pièce selon la revendication précédente, **caractérisée en ce que** les lignes de séparation (5) de l'un des groupes (50) se terminent avant l'un des bords de la pièce (1), de manière à former une paroi (18) ou un cadre (22) entre les extrémités des lignes de séparation (5) et le bord (20) de la pièce (1), à laquelle/auquel des éléments (2) séparables restent attachés, même si la pièce (1) est séparée aux lignes de séparation (5) se terminant avant le bord (20).

10. Pièce (1) selon une des revendications 4 à 9, réalisée sous la forme d'un substrat doté d'un revêtement, de préférence recouvert d'un revêtement fonctionnel organique aux fins d'analyses de protéines ou d'ADN.
